# EUROPÄISCHE PATENTSCHRIFT

(11) **EP 0 378 528 B1**
(45) Veröffentlichungstag und Bekanntmachung des Hinweises auf die Patenterteilung: **02.11.1995**
(21) Anmeldenummer: 88902419.6
(22) Anmeldetag: 24.03.1988
(51) Int. Cl.: G05D 1/02

(54) **VERFAHREN ZUR STEUERUNG EINES SELBSTFAHRENDEN FAHRZEUGS UND SELBSTFAHRENDES FAHRZEUG**
PROCESS FOR STEERING A SELF-PROPELLED VEHICLE AND SELF-PROPELLED VEHICLE
PROCEDE POUR GUIDER UN VEHICULE AUTOMOTEUR ET VEHICULE AUTOMOTEUR

(30) Priorität: 24.03.1987 DE 3709627
(43) Veröffentlichungstag der Anmeldung: 25.07.1990
(73) Patentinhaber: FRAUNHOFER-GESELLSCHAFT ZUR FÖRDERUNG DER ANGEWANDTEN FORSCHUNG E.V., 80636 München (DE); Drunk, Gerhard, Dr.-Ing., 81667 München (DE)
(72) Erfinder: DRUNK, Gerhard, D-7000 Stuttgart 70 (DE); LANGEN, Achim, D-7000 Stuttgart 80 (DE); FORSTER, Stefan, D-7000 Stuttgart 1 (DE); HUG, Christoph, D-7000 Stuttgart 80 (DE); MÜLLERSCHÖN, Joachim, D-7000 Stuttgart 1 (DE)
(86) Internationale Anmeldenummer: DE8800189
(87) Internationale Veröffentlichungsnummer: WO8807711

(56) Entgegenhaltungen:
- EP-A- 0 075 302
- EP-A- 0 142 594
- EP-A- 0 221 423
- DE-A- 3 113 086
- FR-A- 2 526 181
- GB-A- 2 158 965
- US-A- 4 500 970
- WO 87/01814
- WO 86/04430

## Beschreibung

### Technisches Gebiet

Die Erfindung bezieht sich auf ein Verfahren zur Steuerung eines selbstfahrenden Fahrzeugs sowie auf ein derartiges Fahrzeug.

### Stand der Technik

Ein Verfahren zur Steuerung eines selbstfahrenden Fahrzeugs sowie ein selbstfahrendes Fahrzeug der im Oberbegriff der Patentansprüche 1 bzw. 6 vorausgesetzten Art ist beispielsweise aus der EP 0 193 985 A1 bekannt. Bei diesem bekannten selbstfahrenden Fahrzeug bzw. dem Verfahren zur Steuerung dieses Fahrzeugs erfaßt ein erster Sensor die zurückgelegte Wegstrecke. Aus den Ausgangssignalen dieses Sensors wird "grob" die augenblickliche Position des Fahrzeugs bestimmt. Zur Überprüfung dieser Positionsbestimmung ist wenigstens ein zweiter Sensor vorgesehen, der auf dem Fußboden aufgebrachte Muster erfaßt. Dabei ist einer bestimmten Ist/Soll-Position des Fahrzeugs jeweils ein bestimmtes Muster zugeordnet.

Das bekannte Fahrzeug bzw. das bekannte Verfahren haben damit eine Reihe von Nachteilen:

Als gravierendster Nachteil ist zu nennen, daß auf dem Fußboden des Bereichs, in dem sich das Fahrzeug bewegt, bestimmte Muster vorhanden sein müssen. In der Regel müssen diese Muster nachträglich angebracht werden, so daß das Fahrzeug nicht mit nur geringem Aufwand in einer "völlig neuen Umgebung" eingesetzt werden kann. Darüberhinaus muß das Fahrzeug die Muster, anhand derer es seine Position überprüft, "überfahren". Beim Auftreten relativ großer Positionsabweichungen - beispielsweise durch zu großen Schlupf der Räder - erfaßt das Fahrzeug an der vermeintlichen Soll-Position kein Muster und wird dadurch bei der Positionsbestimmung "hilflos". Dies hat in der Regel zur Folge, daß sich das Fahrzeug abschaltet und von einer Bedienungsperson neu positioniert werden muß.

Ein weiterer Nachteil ist, daß alle Markierungen identisch sind. Ein Streifen oder Muster kann nicht von einem anderen unterschieden werden. Wird ein Raster nicht erfaßt oder erfolgen große Positionsabweichungen, sind deswegen Fehlsteuerungen möglich.

Die Erkennung von auf dem Fußboden aufgebrachten Mustern ist aber noch aus einem weiteren Grunde problematisch: Derartige Muster können durch auf dem Fußboden unvermeidlich vorhandenen Schmutz etc. verdeckt bzw. verändert werden. Dies ist gerade bei einer Verwendung des selbstfahrenden Fahrzeugs als Reinigungsfahrzeug, das beispielsweise in einem Arbeitsgang shamponiert und im nächsten Arbeitsgang den Fußboden weiter behandelt, äußerst störend, da in der Regel eine Mustererkennung durch den beim Shamponieren aufgebrachten Schaum unmöglich wird.

Deshalb ist in den japanischen Patentanmeldungen 58-200360 und 58-201652 (EP-A-0 142 594) ein Reinigungsfahrzeug vorgeschlagen worden, das zunächst Informationen über den Randbereich der zu reinigenden Fläche sammelt und dann auf der Basis dieser Information eine Hin- und Herbewegung zur Reinigung der Fläche beginnt. Dies erfolgt beispielsweise so, daß das Gerät zunächst den gesamten Außenbereich der Fläche abfährt und die auf diese Weise ermittelten Daten speichert, um dann an einer Seite der Fläche beginnend innerhalb dieser mäanderförmig hin- und herzufahren, so daß nacheinander unmittelbar benachbarte, sich gegebenenfalls geringfügig überdeckende Flächenstreifen gereinigt werden.

Diese Art der Navigation des Reinigungsfahrzeugs führt häufig zu Fehlern, weil infolge unvermeidbarer Außeneinflüsse das oder die angetriebenen Räder infolge unterschiedlicher Oberflächenstrukturen des Bodens unterschiedliche Schlupfverhalten zeigen sowie infolge Umgebungseinflüssen und gegebenenfalls vom Reinigungsaggregat erzeugte Kräfte unkontrollierte kleine Lenkausschläge eintreten können. Dadurch kommt es vor, daß das Reinigungsfahrzeug entweder über die ermittelte Flächenbegrenzung hinausfährt oder nicht ganz bis an den Rand der Fläche gelangt und/oder daß die parallelen Bahnen der Hin- und Herbewegung nicht so benachbart und/oder parallel zueinander liegen, daß eine durchgehend gereinigte Fläche erhalten wird. Die bei diesem bekannten Fahrzeuzg auftretenden Bahn-Abweichungen sind darüberhinaus ein potentielles Sicherheitsrisiko für den Betreiber.

Es ist auch bereits bekannt (SPIE Vol. 521 Intelligent Robots and Computer Vision (1984), Seiten 62-73, ein selbstfahrendes Fahrzeug, in diesem Fall einen Rasenmäher, mit einer Kamera auszustatten, die im Betrieb Abbildungen der Umgebung erzeugt. Diese Abbildungen werden digitalisiert und auf diese Weise werden Steuerinformationen für das Fahrzeug gewonnen.

Ein derartiges Navigationssystem ist konstruktiv extrem aufwendig und erfordert große Speicher- und Rechnerkapazitäten. Steht diese nicht zur Verfügung oder kann sie in einem kompakten Fahrzeug, beispielsweise einem Reinigungsfahrzeug, nicht untergebracht werden, führt dies zu einer sehr langsamen Fahr- und Arbeitsgeschwindigkeit mit deutlichen wirtschaftlichen Nachteilen für den Betreiber.

Es ist ferner aus der DE 31 13 086 A1 bekannt, ein selbstfahrendes Fahrzeug dadurch zu steuern, daß das Fahrzeug den Abstand zu an den Hallenwänden angebrachten Retroreflektoren mißt. Aber auch dieses bekannte Steuerungsverfahren hat eine Reihe von Nachteilen:

Zum einen ist es erforderlich, daß das Fahrzeug so hoch gebaut ist, daß es über die in dem Raum, in dem sich das Fahrzeug bewegen soll, befindlichen Gegenstände direkte "Sichtverbindung" zu den an den Hallenwänden angebrachten Retroreflektoren hat. Zum anderen - und dies ist der hauptsächlichste Nachteil dieses bekannten Steuerungsverfahrens - ist eine laufende Abstandsmessung und -auswertung erforderlich, da ansonsten bei einer regulär geformten Halle mit beispielsweise viereckigem Grundriß keine eindeutige Zuordnung der gemessenen Abstandswerte zu den verschiedenen an den Hallenwänden angebrachten Retroreflektoren möglich ist, sofern das Fahrzeug nicht gleichzeitig den Abstand zu drei Wänden ermitteln kann. Dies ist aber bei typischen Hallenkonfigurationen in der Regel nicht möglich.

Damit ist bei diesem bekannten Fahrzeug ein hoher Rechenaufwand erforderlich, der folgerichtig in dieser Druckschrift auch zu dem Konzept geführt hat, die Steuerung des Fahrzeugs einem ortsfesten Rechner zu überlassen, an den die Signale der Sensoren telemetrisch übertragen werden. Ferner sind bei dem in der DE 31 13 086 A1 verwandten Verfahren laufend Entfernungsmessungen erforderlich. Es ist auch nicht möglich, auf die genannten Retroreflektoren zu verzichten, zu denen die Entfernungsmesser die Entfernung messen.

Aus der nicht vorveröffentlichten EP-A-221 423 ist es bekannt, den Kurs des Fahrzeuges in unterschiedliche Bereiche einzuteilen und zwar in Bereiche, in denen das Fahrzeug "mit Wandkontakt" geführt wird und in Bereiche, in denen das Fahrzeug "frei" fährt. Hierbei ist unter "Wandkontakt" zu verstehen, daß das Fahrzeug mittels der Entfernungsmesser in einem bestimmten Abstand zu einer Wand geführt wird, während das Fahrzeug beim "oben freien Fahren" lediglich durch die Ausgangssignale von Sensoren gesteuert wird, die eine "Grobposition" ermöglicht. Aus dieser Druckschrift ist es allerdings nicht bekannt, die Ausgangssignale von zweiten Sensoren, die an einem bestimmten Punkt einer Strecke erhalten werden, dazu zu benutzen, die aufgrund der Ausgangssignale der ersten Sensoren berechnete Position zu überprüfen und ggf. zu korrigieren. Die Steuerung durch die ersten Sensoren erfolgt nicht fortlaufend, d.h. es gibt Strecken, auf denen das Fahrzeug lediglich durch die Ausgangssignale der zweiten Sensoren gesteuert wird.

Aus der WO-86/04430 ist ein selbstfahrendes Fahrzeug mit einer Steuereinheit, die den Lenkeinschlag und die Umdrehung wenigstens eines Rades des Fahrzeugs steuert, und in der ein frei vorgebbarer, vom Fahrzeug zu befahrender Kurs sowie die Position von im Bereich des Kurses von vorhandener Umgebungsobjekte (Retroreflektoren) als Koordinaten speicherbar sind, einer ersten Sensoreinheit, die die zurückgelegte Strecke und die Richtung der zurückgelegten Strecke erfaßt und deren Ausgangssignal an die Steuereinheit angelegt ist, und einer zweiten Sensoreinheit deren Ausgangssignal an der Steuereinheit anliegt und die den Abstand zwischen dem Fahrzeug und dem Bereich des Kurses bereits vorhandener Umgebungsobjekte (Retroreflektoren) mißt.

Die genannten Fahrzeuge haben den Nachteil, daß sie nicht ohne speziell für die Führung der Fahrzeuge angebrachte Gegenstände wie Retroreflektoren etc. auskommen, so daß derartige Realisierungen kostenintensiv sind.

### Darstellung der Erfindung

Der Erfindung liegt die Aufgabe zugrunde, ein selbstfahrendes Fahrzeug anzugeben, das bei vergleichsweise geringem Aufwand flexibel und genau über veränderbare Kurse führbar ist, ohne daß spezielle Vorkehrungen längs dieser Kurse nötig werden und ohne daß ein hoher Konstruktionsaufwand und/oder umfangreiche Rechnertätigkeit erforderlich sind.

Eine erfindungsgemäße Lösung dieser Aufgabe ist mit ihren Weiterbildungen in den Patentansprüchen gekennzeichnet.

Überraschenderweise läßt sich die erfindungsgemäß gestellte Aufgabe dadurch lösen, daß von einem selbstfahrenden Fahrzeug gemäß der DE-A-31 13 086, der EP-A-221 423 und der WO-86/04430 ausgegangen und dieses Fahrzeug dadurch weitergebildet wird, daß der zweite Sensor, von dem jedes Fahrzeug wenigstens einen aufweist, der an bestimmten Stellen des frei vorgebbaren Kurses den Abstand des Fahrzeugs von in ihrer genauen Lage bezüglich der Soll-Bahn in der Steuereinheit gespeicherten, markanten Umgebungsobjekten ermittelt. In der Fahrzeug-Steuereinheit sind die Koordinaten dieser markanten Umgebungsobjekte, wie beispielsweise von freien Wandstücken, ebenen Verkleidungsflächen von Maschinen oder Steuerschränken, runden Pfosten oder dgl. gespeichert; dies bedeutet, daß die Umgebung lediglich partiell bekannt sein muß. Insbesondere kommt das erfindungsgemäße Fahrzeug ohne speziell für die Führung des Fahrzeugs angebrachte Gegenstände aus. Der ermittelte Abstand wird mit dem gespeicherten Abstand der Soll-Koordinate des Bahnpunktes vom Umgebungsobjekt zur Überprüfung der Bahntreue (Position und Ausrichtung) des Fahrzeugs verglichen:

Das selbstfahrende Fahrzeug wird also in an sich bekannter Weise zunächst entlang einer vorgegebenen Soll-Bahn verfahren, wobei, wie vorstehend erläutert, an sich Abweichungen vom gesteuerten Kurs unvermeidbar sind. Um diese Abweichungen weitestgehend zu vermeiden und um insbesondere zu verhindern, daß sich aufeinanderfolgende kleine Abweichungen zu großen Kursabweichungen addieren, wird erfindungsgemäß an im Abstand voneinander liegenden Bahnpunkten die genaue Position (Ist-Position) des Fahrzeugs ermittelt, indem mittels mindestens eines zweiten Sensors die Lage des Fahrzeugs bezüglich bekannter Umgebungsobjekte ermittelt wird, um dann die ermittelte Ist-Position mit der Soll-Position zu vergleichen. Ergibt dieser Vergleich eine Differenz, d.h. befindet sich das Fahrzeug nicht an derjenigen Stelle der Soll-Bahn, die es gemäß der vorgenommenen Lenkeinschläge und Umdrehungen des mindestens eines Rades erreicht haben sollte, und/oder nicht in der dem Verlauf der Soll-Bahn an dieser Stelle entsprechenden Ausrichtung, erfolgt eine entsprechende Korrektur.

Das erfindungsgemäße selbstfahrende Fahrzeug hat damit eine Reihe von Vorteilen:

Der vom Fahrzeug befahrbare Kurs ist weder durch im Boden verlegte Leitlinien noch durch im Gebäude angebrachte aktive oder passive Erkennungsmarken festgelegt. Deshalb kann der Kurs des Fahrzeugs jederzeit geändert werden, ohne daß Baumaßnahmen und damit Eingriffe in den laufenden Betrieb erfolgen müßten. Beispielsweise kann ein geänderter Kurs jederzeit an einem off-line-Programmiersystem interaktiv festgelegt werden, das die Hallenumgebung bzw. markante Punkte dieser Umgebung gespeichert hat. Dieser geänderte Kurs kann beispielsweise an einer Haltestation oder auch durch einen Infrarotsender oder dgl. während der Fahrt an das Fahrzeug übergeben werden, das dann unverzüglich eine neue Route befährt.

Das erfindungsgemäße Fahrzeug ist aber auch wesentlich kostengünstiger als die bekannten ähnlich genau fahrenden Systeme, da weder Leitdrähte noch aufwendige und vor allem schnelle Bildverarbeitungseinrichtungen, sondern lediglich einfache abstandsmessende Sensoren benötigt werden bzw. wesentlich genauer in der Zielansteuerung als vergleichbar aufwendige Systeme, bei denen lediglich die zurückgelegte Strecke durch "Aufintegration" ermittelt wird.

Als Umgebungsobjekte werden in jedem zu befahrenden Raum bereits vorhandene Flächen und/oder Gegenstände verwendet, also im allgemeinen keine Umgebungsobjekte, die speziell für diesen Zweck an- oder eingebracht werden.

Das erfindungsgemäße Verfahren läßt sich damit mit minimalem Aufwand durchführen, da es, wie dargelegt, zur Bahnkorrektur lediglich erforderlich ist, im Bereich von gespeicherten, markanten Umgebungsobjekten eine Abstandsmessung durchzuführen und den ermittelten Ist-Abstand mit einem gespeicherten Soll-Abstand zu vergleichen.

Wenn bei der Abstandsmessung festgestellt wird, daß die ermittelte Ist-Koordinate nicht auf der gespeicherten Soll-Bahn liegt und/oder die Ausrichtung des Fahrzeug von der Richtung der Soll-Bahn an dieser Stelle abweicht, steuert die Steuereinheit das mindestens eine Rad des Fahrzeugs so an, daß eine Korrekturbewegung des Fahrzeugs entsteht, durch die dieses wieder auf die Soll-Bahn zurückgeführt bzw. ausgerichtet wird.

Es kann jedoch auch vorkommen, daß beim Vergleich der ermittelten Ist-Koordinate mit der Soll-Koordinate festgestellt wird, daß sich das Fahrzeug zwar in der richtigen Ausrichtung auf der Soll-Bahn befindet, jedoch entweder die Soll-Koordinate noch nicht erreicht hat oder schon über diese hinausgefahren ist. In diesem Fall braucht die Steuereinheit lediglich die von ihr aufgrund der bisherigen Steuerung festgestellte Soll-Koordinate des Fahrzeugs zu korrigieren, so daß sie mit der ermittelten Ist-Koordinate übereinstimmt, d.h. es ist keine Korrekturbewegung des Fahrzeugs erforderlich, sondern dieses wird unter Zugrundelegung der ermittelten Ist-Koordinate weiter entlang der gespeicherten Soll-Bahn gesteuert.

Schließlich ist es möglich, daß das Fahrzeug soweit von seiner Soll-Bahn abgewichen ist, daß eine selbsttätige Rückführung überhaupt nicht mehr oder beispielsweise nur unter Auslassung eines unzulässig großen Flächenbereichs bei der Reinigung oder durch Nichtanfahren einer Förderstation möglich ist. Dann wird das Fahrzeug angehalten und die durch ein optisches und akustisches Signal herbeigerufene Bedienungsperson kann korrigierend eingreifen.

Die Erfindung betrifft ein selbstfahrendes Fahrzeug mit mindestens drei Rädern, das mittels einer Steuereinheit, die den Lenkeinschlag und die Umdrehung mindestens eines Rades steuert, entlang einer vorgebbaren Soll-Bahn bewegbar ist. Dieses Fahrzeug zeichnet sich dadurch aus, daß in der Steuereinheit die Positionen markanter Umgebungsobjekte sowie diesen zugeordnete Soll-Bahnkoordinaten gespeichert sind, daß die Steuereinheit bei Feststellung des Erreichens einer derartigen Soll-Bahnkoordinate mittels mindestens eines zweiten Sensors den Abstand des Fahrzeugs von dem dieser Soll-Bahnkoordinate zugeordneten Umgebungsobjekt oder Umgebungsobjekten ermittelt und aufgrund der gewonnenen Daten die Ist-Position des Fahrzeugs bestimmt wird, und daß die Steuereinheit die Ist-Position mit der durch die Soll-Bahnkoordinate gegebenen Soll-Position vergleicht und beim Auftreten einer Abweichung eine Korrekturmaßnahme vornimmt.

Das erfindungsgemäße Fahrzeug ist also so aufgebaut, daß es in der Weise navigiert werden kann, wie dies vorstehend erläutert wurde. Dabei wirkt die Steuereinheit auf mindestens ein Rad, um eine Korrekturbewegung durchzuführen, wenn die festgestellte Ist-Position nicht auf der Soll-Bahn liegt und/oder die Ausrichtung des Fahrzeugs vom Verlauf der Soll-Bahn abweicht, während dann, wenn bei richtig ausgerichtetem Fahrzeug die festgestellte Ist-Position auf der Soll-Bahn liegt, die Steuereinheit die Soll-Bahnkoordinate entsprechend der festgestellten Ist-Position des Fahrzeugs ändert.

Es ist besonders zweckmäßig, wenn die Steuereinheit eine Überprüfung von Soll-Bahnkoordinaten bei mindestens einigen der Richtungsänderungen des Verlaufs der Soll-Bahn vornimmt, um auf diese Weise die gemäß der Soll-Bahn vorgesehene Änderung der Fahrtrichtung des Fahrzeugs mit einer Korrekturbewegung kombinieren zu können.

Als erste Sensoren können im Prinzip beliebige bereits für die Fahrzeugregelung vorhandene Sensoren verwendet werden. Ebenso können auch für die zweiten Sensoren beliebige Sensoren, beispielsweise optische Sensoren verwendet werden:

Wie bei selbstfahrenden Fahrzeugen an sich üblich, kann bei dem erfindungsgemäßen Fahrzeug die Bewegung des mindestens eines Rades überwacht und diese Bewegungen kennzeichnende Signale der Steuereinheit zugeführt werden, etwa dadurch, daß das mindestens eine Rad mit einem die kennzeichnenden Signale erzeugenden Impulsgeber gekoppelt ist. Auf diese Weise erhält die Steuereinheit Rückmeldungen über die von ihr verursachten Radbewegungen und kann vergleichen, ob die gewünschten Radbewegungen mit den ermittelten Radbewegungen übereinstimmen, wobei die so ermittelte Bahn dann die Soll-Bahn darstellt. Selbstverständlich können bei entsprechender Auslegung des Fahrzeugs als Ausgangssignale des ersten Sensors im Sinne der vorliegenden Erfindung auch Signale herangezogen werden, die beispielsweise die Umdrehung des von der Steuereinheit gesteuerten Motors kennzeichnen.

Es ist ferner bekannt (z.B. DE-OS 31 37 745, PCT/WO 85/00229), zur Entfernungsmessung Ultraschallsensoren einzusetzen, und auch bei dem erfindungsgemäßen Fahrzeug kann der mindestens eine zweite Sensor ein Ultraschallsensor sein.

Zur Ermittlung der Ist-Position des Fahrzeugs bezüglich einem Umgebungsobjekt bzw. bezüglich mehreren Umgebungsobjekten dienen vorzugsweise mindestens drei Ultraschallsensoren, von denen einer den Abstand des Fahrzeugs von einem Umgebungsobjekt in Richtung der Längsachse des Fahrzeugs mißt und die beiden anderen in Richtung der Längsachse des Fahrzeugs versetzt sind und zur gleichen Seite Abstände von einem Umgebungsobjekt in Richtung der Querachse des Fahrzeugs messen.

Auf diese Weise werden in zwei Koordinatenrichtungen Entfernungen von im Raum befindlichen Umgebungsobjekten, deren Position bezüglich einer Soll-Bahnkoordinate in der Steuereinheit gespeichert sind, ermittelt, so daß die Ist-Position des Fahrzeugs festgestellt werden kann. Da darüberhinaus seitlich zwei im Abstand voneinander befindliche Sensoren und insbesondere Ultraschallsensoren Entfernungsmessungen durchführen, läßt sich auf diese Weise auch noch die Winkelstellung des Fahrzeugs bezüglich des zugehörigen Umgebungsobjektes und damit bezüglich der gespeicherten Soll-Bahn ermitteln.

Ferner kann mindestens ein Ultraschallsensor vorgesehen sein, der Ultraschall nach oben abstrahlt, so daß aus der Laufzeit der reflektierten Schallenergie auf an der Decke eines Raumes vorhandene, in ihrer Lage bekannte Umgebungsobjekte, etwa vorstehende Leuchten, geschlossen werden kann, wodurch die Position des Fahrzeugs bezüglich dieser Umgebungsobjekte bekannt ist.

Im Betrieb eines selbstfahrenden Fahrzeugs kann es selbstverständlich vorkommen, daß sich in dem zu befahrenden Bereich oder dicht benachbart zu diesem Hindernisse befinden, die beim Einspeichern der Soll-Bahn nicht vorhanden waren, oder daß sich Personen oder andere Hindernisse während des Betriebes des Fahrzeuges in den Bereich von dessen Bewegungsbahn hineinbewegen. Um zu verhindern, daß in solchen Fällen das Fahrzeug mit dem Hindernis zusammenstößt, kann das Fahrzeug mehrere Hindernissensoren aufweisen, die je nach ihrer Ausbildung und Schaltung ein Umfahren des Hindernisses, also einen Eingriff in die normale Navigation, oder ein Abstoppen des Fahrzeugs bewirken.

Hindernisse können beispielsweise auch die Form von Stufen haben, über die das Fahrzeug abstürzen könnte. Es ist daher zweckmäßig, wenn im vorderen Bereich des Fahrzeugs auf einem Kreisbogen senkrecht nach unten gerichtete Absturzüberwachungssensoren vorgesehen sind, die eine Stufe anzeigende Abstandsvergrößerungen zwischen ihrer Position am Fahrzeug und dem vom Fahrzeug befahrene Boden feststellen und das Fahrzeug dann abstoppen.

Da die Absturzüberwachungssensoren in verhältnismäßig geringem Abstand vom Fahrzeug auftretende Abstandsänderungen feststellen müssen, werden zu diesem Zweck vorzugsweise Infrarotsensoren eingesetzt.

Um den Bereich vor dem Fahrzeug auf Hindernisse zu überwachen, können an der Vorderseite und im vorderen Seitenbereich bevorzugt Ultraschall-Hindernissensoren vorgesehen sein, deren Schallkeulen mittels vorgesetzter Schallkanäle so geformt sind, daß mindestens ein den zu überwachenden Bereich vollständig abdeckendes Schallfeld gebildet ist.

Durch die Verwendung von Schallkanälen, die an sich bekannt sind (US-PS 4 516 229; DE-OS 31 37 745), ist es möglich, die Schallkeulen von Ultraschallsensoren so zu formen, daß sich die gewünschte Überdeckung ergibt, wodurch einerseits Standard-Ultraschallsensoren eingesetzt werden können und andererseits nur eine geringe Anzahl derartiger Sensoren zur vollständigen Überwachung benötigt wird.

Um im Abstand vor dem Fahrzeug auftauchende Hindernisse festzustellen, können drei Ultrachall-Hindernissensoren vorhanden sein, die ein zu einer horizontalen Ebene symmetrisches, sich in gleicher Weise oberhalb und unterhalb der Ebene ausbreitendes, einen zu überwachenden Bereich vollständig abdeckendes Schallfeld erzeugen, so daß relativ weit vor dem Fahrzeug auftauchende Hindernisse nach ihrer Lage und ihrer Entfernung erkannt und entsprechende Steuersignale ausgelöst werden können.

Um verhältnismäßig niedrige Hindernisse, etwa Türstopper, vor dem Fahrzeug rechtzeitig feststellen zu können, können drei Ultraschall-Hindernissensoren vorgesehen werden, die ein schräg nach vorn und unten gerichtetes, einen zu überwachenden Bereich vollständig abdeckendes Schallfeld erzeugen.

Wenn das Fahrzeug entlang einer Wand verfahren wird, kann es durch Abweichung von der Soll-Bahn oder auch durch zuvor nicht vorhandener Hindernisse zu einem Aufprall kommen. Um einen derartigen Zusammenstoß zu verhindern, können zwei im Bereich einer vorderen Seitenkante des Fahrzeugs vorgesehene optische Hindernissensoren vorhanden sein, von denen der eine unter einem Winkel von 10° bis 30° bezüglich der Längsachse des Fahrzeugs nach vorn abstrahlt und so eine Fernerkennung bewirkt, während der andere unter einem Winkel von 50° bis 70° bezüglich der Längsachse des Fahrzeugs nach vorn abstrahlt, wodurch plötzlich nahe dem Fahrzeug auftauchende Hindernisse erkannt und eine Notbremsung ausgelöst werden kann.

Das erfindungsgemäße Fahrzeug kann beispielsweise als Reinigungsfahrzeug, als Flurförderfahrzeug, als Überwachungsfahrzeug für militärische und/oder Sicherheitszwecke, als Inspektionsfahrzeug an gefährlichen Stellen, beispielsweise in Kernreaktoren, als Sensor-tragendes Fahrzeug, das beispielsweise an verschiedenen Stellen die Luftverschmutzung usw. mißt, verwendet werden.

Bei Verwendung als Reinigungsfahrzeug kann es eine Reinigungsbürste aufweisen, oberhalb der eine Absaugeinrichtung angeordnet ist, um die von der Reinigungsbürste vom Boden aufgenommene Schmutzteile abzusaugen.

Durch die in den Ansprüchen gekennzeichnete Ausbildung des erfindungsgemäßen Fahrzeugs wird ein hohe Bahntreue erreicht, die für das Abfahren eines Kurses eines selbstfahrenden Fahrzeugs völlig ausreichend ist. Je nach Ausbildung der Schallkeulen der Sensoren kann jedoch die Positioniergenauigkeit nicht ausreichend für das "Andocken" an eine Station sein, in der beispielsweise Nutzlasten übergeben, in der beispielsweise Nutzlasten übergeben oder Reinigungsmittel nachgefüllt werden sollen. In derartigen Lastübergabestationen ist typischerweise eine Positionierung mit einer Genauigkeit von ± 2mm in Fahrtrichtung, ± 1mm beim Abstand von der Station und ± 0,5° Verdrehung zwischen Fahrzeug-Längsachse und Anlegestation erforderlich.

Um diese hohe Positioniergenauigkeit unter allen Umständen sicherzustellen, ist erfindungsgemäß wenigstens ein dritter Sensor vorgesehen, aus dessen Ausgangssignal die Steuereinheit die Position des Fahrzeugs relativ zu einer Haltestation bestimmt.

Bevorzugterweise ist dieser dritte Sensor ein optischer Abstandssensor, der zur Bestimmung der Lage des Fahrzeugs relativ zu einer Haltestation die Lage einer rechtwinkligen Kante einer ebenen Fläche in kurzen Zeitabständen erfaßt. Typischerweise werden bei der Vorbeifahrt des Fahrzeugs an dieser Referenzkante die Meßwerte des dritten Sensors und der internen Fahrzeug-Positionsdaten gespeichert. Die Steuereinheit erkennt, wenn an dieser Kante vorbeigefahren wurde und leitet die Berechnung der Relativ-Position ein. Hierzu werden die intern erfaßten Fahrzeug-Positionsdaten mit den Abstandsmeßwerten verknüpft (Position in Fahrtrichtung und zugehöriger Meßwert). Die Verkippung bzw. Verdrehung des Fahrzeugs läßt sich leicht aus zwei direkt oder in einem gewissen Abstand aufeinander folgenden Meßwerten nach den bekannten Gesetzen der Trigonometrie errechnen. Die Position auf der Fahrachse, an der der Meßstrahl des optischen Sensors die Referenzkante überfahren hat, ergibt sich als der Punkt, an dem der Sensor die Ecke eindeutig erkannt hat (Übergang des Sensorsignals in einen zur Fahrtrichtung-Position proportionalen Abstand) abzüglich des "Offset-Werts", der die Meßstrahlbreite und den Abstand zum Fahrzeug berücksichtigt.

Hierbei ist vorzugsweise pro Millimeter Fahrbewegung eine Abstandmessung zu machen, d.h. bei 0,1 m/s Fahrgeschwindigkeit müssen 100 Messungen/s erfolgen. Ferner muß sich das Fahrzeug auf einer exakt geraden Bahn an der Referenzkante vorbeibewegen.

Das in den Ansprüchen gekennzeichnete erfindungsgemäße Fahrzeug ermöglicht damit das flexible Befahren von wechselnden Kursen. Hierbei ist es besonders vorteilhaft, wenn auch bei der Programmierung der erfindungsgemäß ausgebildeten Steuereinheit entsprechende Wege beschritten werden:

Hierzu erfolgt das Programmieren des einzuhaltenden Kurses durch sogenanntes "Teachen", d.h. das Fahrzeug lernt bei einem Abfahren des Kurses, bei dem es eine Bedienungsperson von Hand steuert. Dabei wird die Umgebung, in der sie das Fahrzeug bewegen soll, graphikgestützt interaktiv an einen Personal-Computer eingegeben, der automatisch die Steuerungs-Software für die geänderte Hallenumgebung generiert.

Bei der Offline-Programmierung wird der Hallengrundriß mit der Position der Stationen, Referenzflächen, den gewünschten Fahrbahnen und Sperrflächen an einer Graphikstation menuegeführt interaktiv eingegeben. Die zugehörigen Verfahrprogramme zwischen den Stationen werden dann automatisch generiert.

### Kurze Beschreibung der Zeichnung

Die Erfindung wird im folgenden anhand der Figuren näher erläutert, in denen ohne Beschränkung der universellen Verwendbarkeit des erfindungsgemäßen Fahrzeugs in den Fig. 1 bis 9 ein als Reinigungsfahrzeug und in den Fig. 17 folgende ein als Flurförderfahrzeug verwendetes Fahrzeug beschrieben ist.
- Figur 1: zeigt in einer perspektivischen Darstellung ein selbstfahrendes Reinigungsfahrzeug in einer Ansicht schräg von vorn.
- Figur 2: zeigt eine Seitenansicht des Reinigungsfahrzeuges aus Figur 1.
- Figur 3: zeigt eine Ansicht des Reinigungsfahrzeugs aus den Figuren 1 und 2 von vorn.
- Figur 4: zeigt in perspektivischer Darstellung eine Ansicht des Reinigungsfahrzeuges aus den Figuren 1 bis 3 schräg von hinten.
- Figur 5: zeigt in einer teilweisen aufgebrochenen Darstellung entsprechend Figur 4 Teile des Reinigungsfahrzeuges, so daß die Lage der Räder und einiger Sensoren im Gehäuse erkennbar ist, während andere Teile weggelassen wurden.
- Figur 6: zeigt in einer schematischen Draufsicht die Lage der Räder und der Sensoren aus Figur 5 im bzw. am Gehäuse.
- Figur 7: zeigt in einer Schemazeichnung, die Kanten des Gehäuses des Reinigungsfahrzeuges erkennen läßt, die Lage der verschiedenen Sensoren am Gehäuse.
- Figur 8: zeigt eine schematische Seitenansicht des Reiniggungsfahrzeuges, wobei die Seitenwand des Gehäuses weggebrochen ist, um schematisch und stark vereinfacht Einzelteile erkennen zu lassen.
- Figur 9: zeigt in einer perspektivischen Teilansicht das Gehäuse, das teilweise aufgebrochen ist, so daß Teile des Reinigungsaggregats zu erkennen sind, während andere Teile weggelassen wurden.
- Figur 10: zeigt in einer schematischen Draufsicht das an einem Punkt an einer Soll-Bahn befindliche Reinigungsfahrzeug bei einer Messung von Entfernungen zu Umgebungsobjekten.
- Figur 11: zeigt in einer Seitenansicht ein von einem Ultraschall-Hindernissensor erzeugten Schallfeld.
- Figur 12: zeigt in einer schematischen Draufsicht die Form des vom Ultraschall-Hindernissensor gemäß Figur 11 und den zugehörigen Ultraschall-Hindernissensoren erzeugten Schallfeld.
- Figur 13: zeigt in einer Seitenansicht ein von einem anderen Ultraschall-Hindernissensor erzeugten Schallfeld.
- Figur 14: zeigt in einer schematischen Draufsicht die Form des von Ultraschall-Hindernissensor gemäß Figur 13 und den zugehörigen Ultraschall-Hindernissensoren erzeugten Schallfeld.
- Figur 15: zeigt in einer Teilseitenansicht ein von einem Ultraschall-Hindernissensor für sehr niedrige Hindernisse erzeugtes Schallfeld.
- Figur 16: zeigt in einer schematischen Draufsicht die Form des vom Ultraschall-Hindernissensor gemäß Figur 15 und den zugehörigen Ultraschall-Hindernissensoren erzeugten Schallfeld.
- Figur 17: zeigt in perspektivischer Darstellung ein selbstfahrendes Flurförderfahrzeug in einer Ansicht schräg von vorn.
- Figur 18: zeigt eine Aufsicht auf ein erfindungsgemäßes Flurförderfahrzeug in einer exemplarischen Umgebung und
- Figur 19: zeigt eine Ausbildung eines als zweiter Sensor verwendeten Ultraschall-Senders.

### Beschreibung von Ausführungsbeispielen

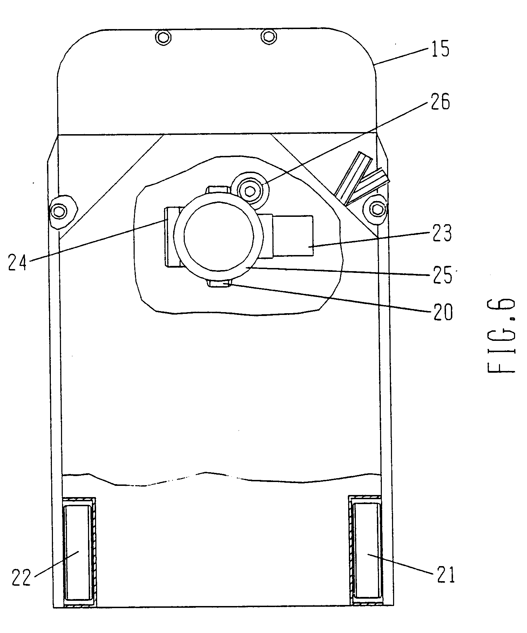

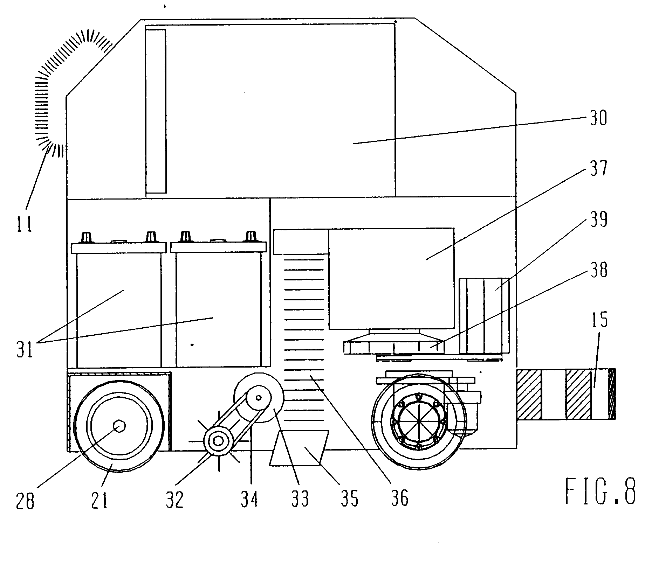

Das dargestelle Reinigungsfahrzeug 1 hat einen nicht dargestellten Rahmen, auf dem ein Gehäuse mit einer Vorderwand 2, zwei Seitenwänden, von denen nur die Seitenwand 3 bezeichnet ist, und einer Rückwand 4 angeordnet ist, und das an seiner Oberseite eine Deckwand 5 hat. Im Bereich der Vorderwand 2 sind schräg zu den Seitenwänden verlaufende Übergangswände 6, 7 ausgebildet. Am hinteren Ende des Gehäuses sind zwei Räder 21, 22 um Achsen frei drehbar gehalten, von denen in Figur 8 die Achse 28 des Rades 21 zu erkennen ist. Am vorderen Ende des Reinigungsfahrzeugs 1 ist in nicht näher dargestellter Weise mittig ein Rad 20 gelagert, auf dessen Achse ein Gleichstrommotor 24 (Figur 6) sitzt. An der dem Gleichstrommotor 24 gegenüberliegenden Seite ist auf der Achse des Rades 20 ein für Flurfahrzeuge üblicher Drehimpulsgeber 23 befestigt, der beispielsweise ein Drehimpulsgeber des Typs 606900-1024 der Hohner Elektrotechnik KG, 7200 Tuttlingen, sein kann. Das Rad 20 ist um eine senkrechte Achse drehbar gelagert, und die hierzu vorgesehene Halterung weist an ihrem oberen Ende einen Zahnkranz 25 auf, dessen am äußeren Umfang ausgebildeten Zähne in kämmendem Eingriff mit einem Zahnrad 27 steht, das auf der Ankerwelle eines Elektromotors 26 sitzt.

Mit einer derartigen Anordnung ist es möglich, das Rad 20 mittels des Gleichstrommotors 24 anzutreiben, so daß es sich um eine horizontale Achse dreht, wobei der Drehimpulsgeber 23 den Grad der Verdrehung kennzeichnende Signale erzeugt. Zur Steuerung kann der Motor 26 aktiviert werden, der mittels des auf seiner Ankerwelle befestigten Zahnrades 27 den Zahnkranz 25 und damit das Rad 20 zur Durchführung von Lenkbewegungen um eine senkrechte Achse verdreht, wobei der Grad der Verdrehung in für derartige Fälle üblicher Weise mittels eines auf der senkrechten Drehachse angebrachten Potentiometers gesteuert wird, dessen Verdrehung über seinen stationären Abgriff ermittelt wird, indem die sich ergebene Widerstandsänderung des Potentiometers gemessen wird.

Es sei erwähnt, daß im Gehäuse des Reinigungsfahrzeugs 1 aufladbare Batterien 31 (Figur 8) untergebracht sind, die die elektrische Energie für den Gesamtbetrieb und daher auch für die Aktivierung des Gleichstrommotors 24 und des Elektromotors 26 liefern.

Um das vorstehend beschriebene Reinigungsfahrzeug 1 entlang einer vorgegebenen Bahn zu bewegen, ist in der nur schematisch dargestellten Steuereinheit 30 (Figur 8) eine Bewegungsbahn eingespeichert, wie dies für gewisse Arten von selbstfahrenden Fahrzeugen üblich ist. Diese Bewegungsbahn kann vom Betreiber über das Bedienungspult eingegeben werden, und sie hat für ein Reinigungsfahrzeug üblicher Weise einen mäanderförmigen Verlauf, der die gesamte zu reinigende Fläche überdeckt, wobei die benachbarten Bahnen des mäanderförmigen Verlaufs so nebeneinander liegen, daß die gesamte Fläche ohne Unterbrechungen gereinigt wird. Die Daten über die gespeicherte Bahn, die sogenannte Soll-Bahn, liefern die Informationen, gemäß denen der Gleichstrommotor 24 das Rad 22 dreht und der Elektromotor 26 in der vorstehend beschriebenen Weise Lenkeinschläge des Rades 20 erzeugt, wobei der Drehimpulsgeber 23 und das durch die Lenkeinschläge zu verstellende Potentiometer elektrische Signale an die Steuereinheit 30 zurückführen, um in der für Flurfahrzeuge üblichen Weise eine Rückmeldung über die ausgeführten, von der Steuereinheit 30 gelieferten Fahrbefehle zu bewirken.

Beim Bewegen des Reinigungsfahrzeugs 1 entlang der Soll-Bahn treten aus unterschiedlichsten Gründen Abweichungen zwischen der Bewegungsbahn des Reinigungsfahrzeugs 1 und der Soll-Bahn auf. So kann es beispielsweise vorkommen, daß das angetriebene Rad 20 seine Umdrehungen mit einem gewissen, nicht vorhersehbaren Schlupf ausführt, wodurch dann zwar der Drehimpulsgeber 23 rückmeldende Signale für die Steuereinheit 30 erzeugt, die die von der Steuereinheit 30 an sich erzeugte Drehbewegung anzeigen, während das Reinigungsfahrzeug 1 tatsächlich infolge des Schlupfes des Rades 20 eine kürzere Wegstrecke zurückgelegt hat. Entsprechend können im Betrieb ungewollte Lenkausschläge des Rades 20 zu einer Abweichung von der Soll-Bahn führen. Ganz wesentlich sind bei einer derartigen Steuerung entlang einer Soll-Bahn jedoch auch Abweichungen infolge von unvermeidbaren Toleranzen, so daß sich über einen längeren Bahnverlauf die jeweils nur geringen Abweichungen zu einer erheblichen Abweichung addieren.

Um das Reinigungsfahrzeug 1 immer auf die Soll-Bahn zurückzuführen, sind an der Vorderwand 2 ein Ultraschallsensor 50 und an der Seitenwand 3 zwei Ultraschallsensoren 51, 52 angebracht, wobei die Ultraschallsensoren 51 und 52 in Richtung der Längsachse des Reinigungsfahrzeugs 1 im Abstand voneinander angeordnet sind. Jeder dieser Ultraschallsensoren 50, 51 und 52 enthält einen üblichen Ultraschallsender, der beispielsweise jeweils am Grund der oberen Schallkanäle 53, 55, 57 angeordnet ist, so daß die Schallkanäle 53, 57, 55 die abgestrahlte Schallenergie in der durch die Form des Schallkanals bestimmten Weise zu einer Schallkeule formen. Die Ultraschallempfänger befinden sich dann am Grund der Schallkanäle 54, 56, 58 der Ultraschallsensoren 50, 51, 52.

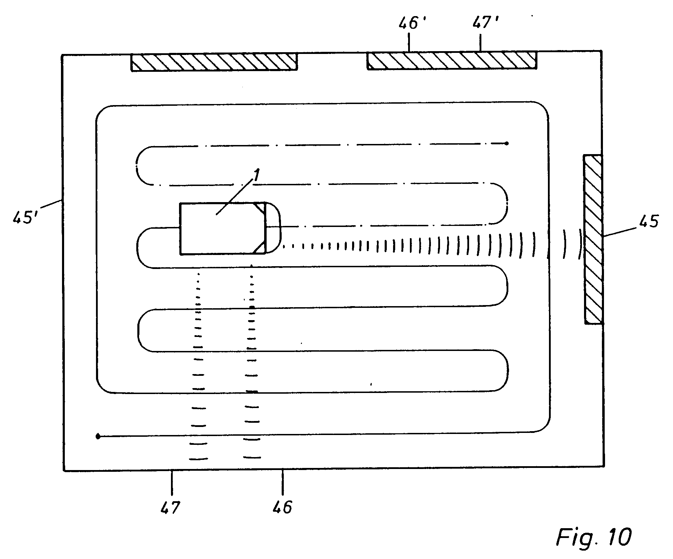

Wie in Figur 10 angedeutet, sind im Verlauf der Soll-Bahn des Reinigunsgsfahrzeugs 1 an einigen Stellen Umgebungsobjekte 45, 46, 47, 45′, 46′, 47′ etwa Schränke, Wände u.ä. vorhanden, die in ihrer Lage innerhalb des Raums und damit bezüglich der Soll-Bahn bekannt und definiert sind und deren Lage in der Steuereinheit 30 bezüglich bestimmter Soll-Bahnkoordinaten gespeichert ist. Gelangt daher das Reinigungsfahrzeug 1 zu einer Soll-Bahnkoordinate, der die Umgebungsobjekte 45, 46, 47 zugeordnet sind, so erfolgen mittels der Schallsensoren 50, 51, 52 Abstandsmessungen, indem durch impulsartiges Aussenden von Ultraschallenergie des Schallerzeugers des Ultraschallsensors 50 das Umgebungsobjekt 45, etwa eine Schrankwand beaufschlagt wird und die reflektierten Schallimpulse durch den Schallkanal 54 zum Empfänger des Ultraschallsensors 50 gelangen. Aus der Laufzeitdifferenz ergibt sich dann in üblicher Weise der Abstand des Reinigungsfahrzeugs 1 vom Umgebungsobjekt 45.

In entsprechender Weise werden mittels der Ultraschallsensoren 51 und 52 die Abstände von den Umgebungsobjekten 46, 47, beispielsweise einem Wandvorsprung ermittelt.

Aus den so bestimmten Abständen des Reinigungsfahrzeugs 1 von den Umgebungsobjekten 45, 46, 47 läßt sich auf einfache Weise in der Steuereinheit 30 die tatsächliche Lage des Reinigungsfahrzeugs 1 (Ist-Lage) bezüglich der Soll-Koordinate auf der Soll-Bahn ermitteln, wobei durch Vergleich der von den Sensoren 51 und 52 ermittelten Entfernungen auch festgestellt wird, unter welcher Winkellage das Reinigungsfahrzeug 1 zu den Umgebungsobjekten 46 und 47 steht.

Im übrigen kann mittels des auf der Deckwand 5 angeordneten Schallkanäle 151 und 152 aufweisender Ultraschallsensors 150 auch eine Entfernungsmessung zur Raumdecke vorgenommen werden, um beispielsweise das Vorhandensein einer einem Punkt auf der Soll-Bahn zugeordneten Kante einer Deckenleuchte o.ä. festzustellen.

Aufgrund der so erhaltenen Informationen ist es möglich, die Position und die Ausrichtung des Reinigungsfahrzeuges 1 derart zu korrigieren, daß es in definierter Weise auf die Soll-Bahn zurückgelangt. So wird beispielsweise bei Feststellung einer Abweichung der Ist-Position des Reinigungsfahrzeugs 1 von der Soll-Bahn und/oder bei einer Abweichung der Ausrichtung des Reinigungsfahrzeugs 1 bezüglich des Verlaufs der Soll-Bahn von der Steuereinheit 30 eine entsprechende Lenkbewegung des Rades 20 erzeugt, durch das das Reinigungsfahrzeug 1 wieder auf die Soll-Bahn zurückgeführt bzw. bezüglich der Soll-Bahn ausgerichtet wird.

Ergeben die Entfernungsmessungen, daß sich das Reinigungsfahrzeug 1 zwar richtig ausgerichtet auf der Soll-Bahn befindet, jedoch die zugrundegelegte Soll-Koordinate auf der Soll-Bahn noch nicht erreicht oder schon überfahren hat, so wird die in der Steuereinheit 30 zugrundegelegte Stellung des Reinigungsfahrzeugs 1 auf der Soll-Bahn entsprechend korrigiert, d.h. die Steuereinheit 30 geht nach der Korrektur von der Ist-Position des Reinigungsfahrzeugs 1 aus und steuert dieses nachfolgend entlang der Soll-Bahn, bis mit Hilfe der Ultraschallsensoren 50, 51 und 52 eine erneute Überprüfung der Position des Reinigungsfahrzeugs 1 bezüglich der Soll-Bahn vorgenommen wird.

Wie in Figur 10 angedeutet, erfolgt in dem mäanderförmigen Verlauf der Soll-Bahn des Reinigungsfahrzeugs 1 die Korrektur zweckmäßigerweise unmittelbar nachdem das Reinigungsfahrzeug 1 in die entgegengesetzte Fahrtrichtung umgesteuert wurde und/oder unmittelbar vor einer derartigen Umsteuerung.

Das Reinigungsfahrzeug 1 weist zusätzlich zu den zur Navigation dienenden Ultraschallsensoren 50, 51, 52 und 150 weitere Sensoren sowie Einrichtungen auf, die dem Kollisionsschutz dienen.

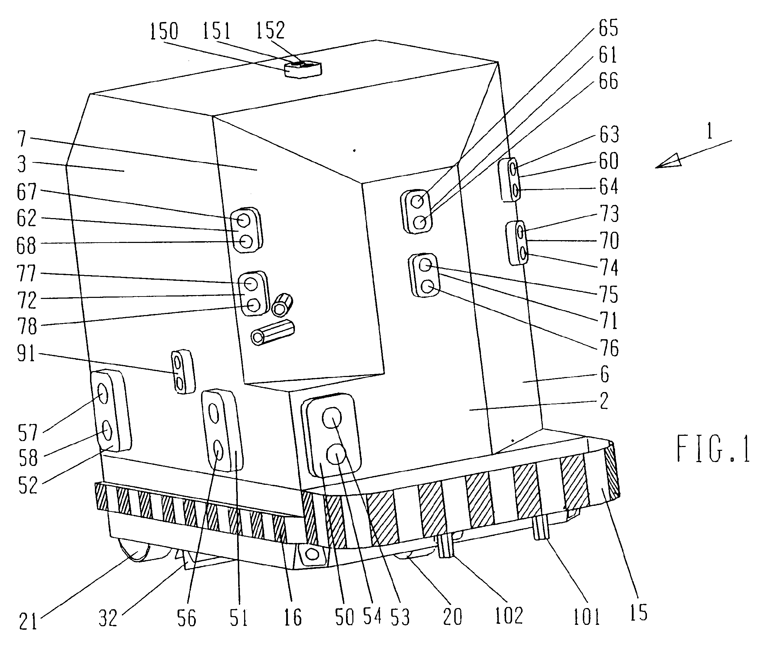

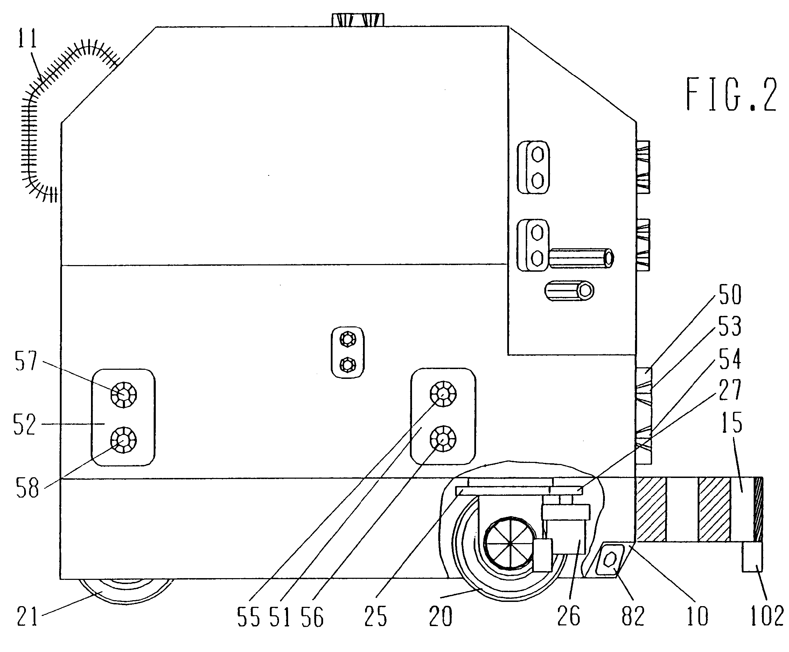

Wie den Figuren 1 und 2 zu entnehmen ist, sind im unteren Bereich der Seitenwände, von denen nur die Seitenwand 3 bezeichnet ist, Stoßschutzleisten 16 montiert. An der Vorderseite des Reinigungsfahrzeugs 1 befindet sich, etwa auf Höhe der Stoßschutzleisten 16 und 17 ein nach vorn über das Gehäuse des Reinigungsfahrzeugs 1 vorstehender Rammschutzbügel 15, wie er bei Flurförderfahrzeugen üblich ist.

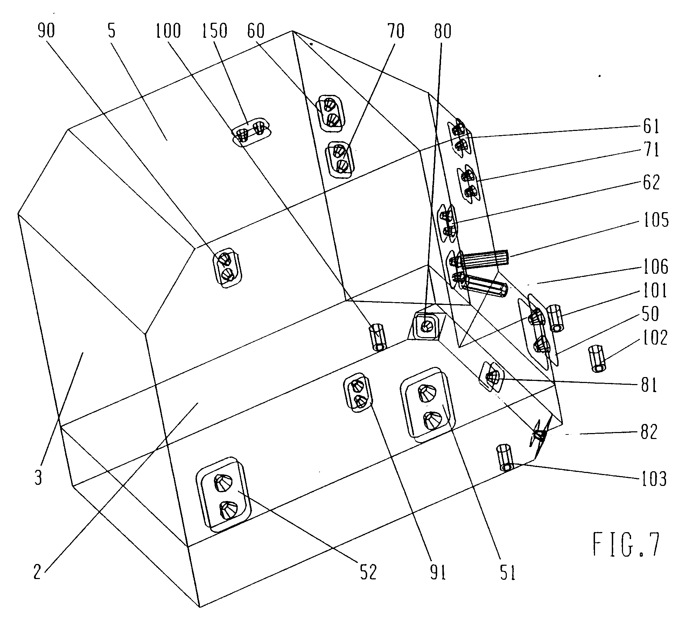

An dem Rammschutzbügel 15 sind sich von diesem nach unten erstreckende Infrarotsensoren 101 und 102 befestigt, und entpsrechende Sensoren 100 und 103 sind auf im wesentlichen gleicher Höhe im vorderen Bereich der Seitenwände befestigt, wobei die vier Infrarotsensoren 100, 101, 102 und 103 in etwa auf einem Kreisbogen liegen, wie dies in Figur 7 zu erkennen ist. Diese Infrarotsensoren ermitteln durch ihre nach unten abgestrahlte Infrarotstrahlung und den Empfang der reflektierten Energie den Abstand zum Boden. Vergrößert sich dieser Abstand über ein vorgegebenes Maß hinaus, etwa dadurch, daß sich einer der Infrarotsensoren 100, 101, 102, 103 über einer niedriger liegenden Stufe befindet, während sich die Räder 20, 21, 22 des Reinigungsfahzeugs 1 noch auf dem oberhalb der Stufe befindlichen Boden abstützen, wird durch die vom Infrarotsensor festgestellte, zu große Abstandsdifferenz ein Signal ausgelöst, durch das der Antrieb des Reinigungsfahrzeugs 1 unterbrochen und gegebenfalls ein die Bedienungsperson informierendes akustisches und/oder optisches Signal ausgelöst wird. Auf diese Weise ist eine Absturzsicherung für das Reinigungsfahrzeug 1 erreicht.

Im Betrieb des Reinigungsfahrzeugs 1 kann es vorkommen, daß im Abstand vor dem Reinigungsfahrzeug Hindernisse auftauchen, die bei der Eingabe der Soll-Bahn nicht vorhanden waren, wobei es sich beispielsweise um nachträglich in den Raum eingebrachte oder nachträglich verückte Gegenstände oder um Personen handeln kann, die sich in den Bereich der Soll-Bahn bewegen.

Um eine Überwachung auf derartige Hindernisse vorzunehmen, sind am Gehäuse des Reinigungsfahrzeugs 1 zwei Gruppen von Ultraschallsensoren, 60, 61, 62 und 70, 71, 72 vorhanden, von denen sich die Ultraschallsenoren 61 und 71 in der Mitte auf der Vorderwand 2 befinden, während die Ultraschallsensoren 60, 70 an der Übergangswand 6 befestigt sind, die die Vorderwand 2 mit der einen Seitenwand verbindet und unter einem Winkel von etwa 45° bezüglich der Vorderwand 2 ausgerichtet ist.

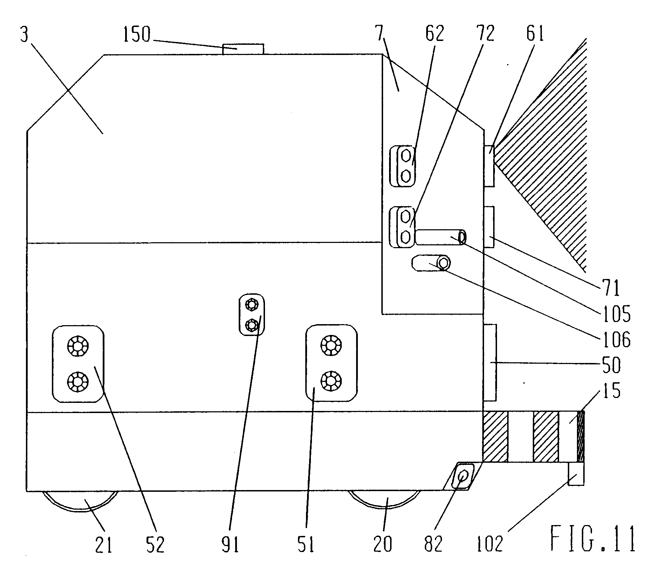

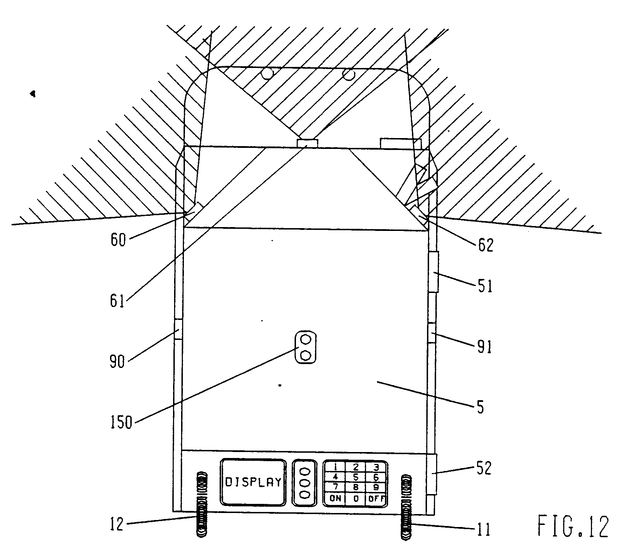

Die Ultraschallsensoren 60, 61, 62 haben Schallkanäle 63, 65, 67, an deren Grund die Schallerzeuger angeordnet sind und die den abgestrahlten Schall zu Schallkeulen formen so daß sich ein Bereich von etwa 180° überdeckendes, sich gleichmäßig oberhalb und unterhalb einer horizontalen Ebene verteilendes Schallfeld ergibt, wie dies in den Figuren 11 und 12 dargestellt ist.

Reflektierter Schall wird von den Schallkanälen 64, 66, 68 aufgefangen und jeweils zu der dem Schallerzeuger zugeordneten Empfängereinrichtung geleitet, so daß sich durch die Laufzeitdifferenz zwischen ausgesandtem und empfangenem Schall die Entfernung von einem vor dem Reinigungsfahrzeug 1 auftauchenden Hindernis ermitteln läßt. Auf diese Weise kann das Reinigungsfahrzeug rechtzeitig angehalten und aber auch so gesteuert werden, daß es entweder das Hindernis umfährt oder die Fahrtrichtung umkehrt.

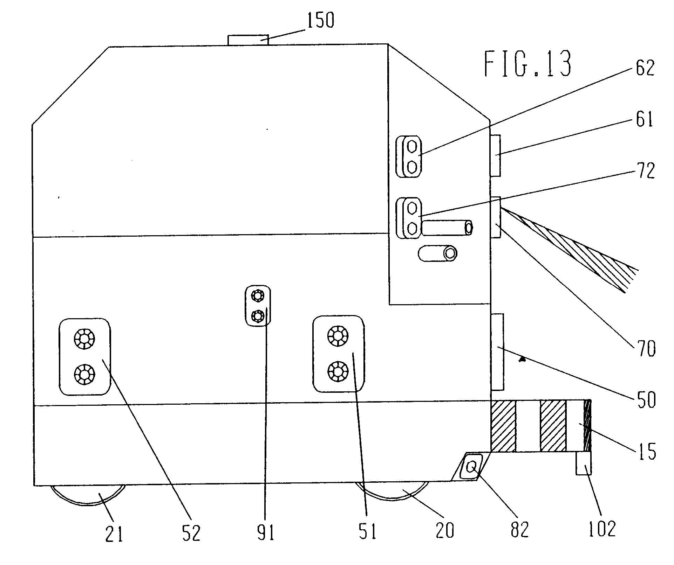

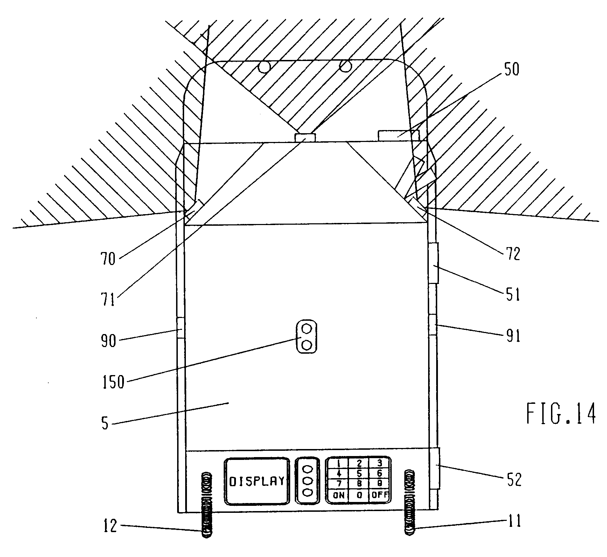

Da sich mit Hilfe der Ultraschallsensoren 60, 61, 62 "mittelhohe" Hindernisse nicht immer sicher erkennen lassen, erzeugen die Ultraschallsensoren 70, 71 und 72 durch Abstrahlung von Schallenergie durch ihre Schallkanäle 73, 75, 77 ein den gesamten Bereich vor dem Reinigungsfahrzeug 1 abdeckendes schräg nach unten gerichtetes Schallfeld, wie dies in den Figuren 13 und 14 gezeigt ist, so daß auf diese Weise durch die Schallkanäle 74, 76, 78 von niedrigeren Hindernissen reflektierte Schallenergie aufgefangen und ausgewertet werden kann.

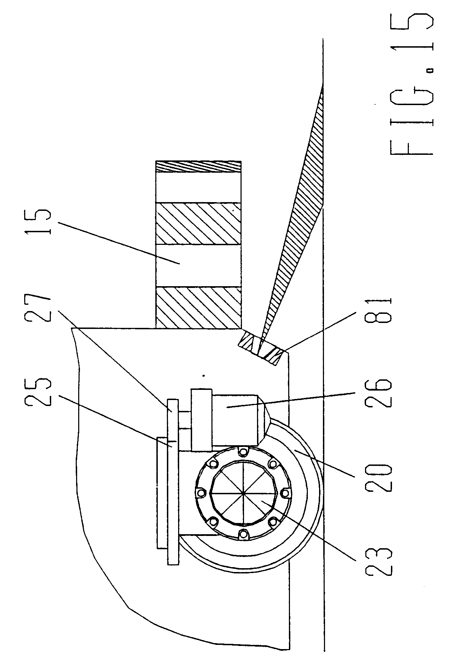

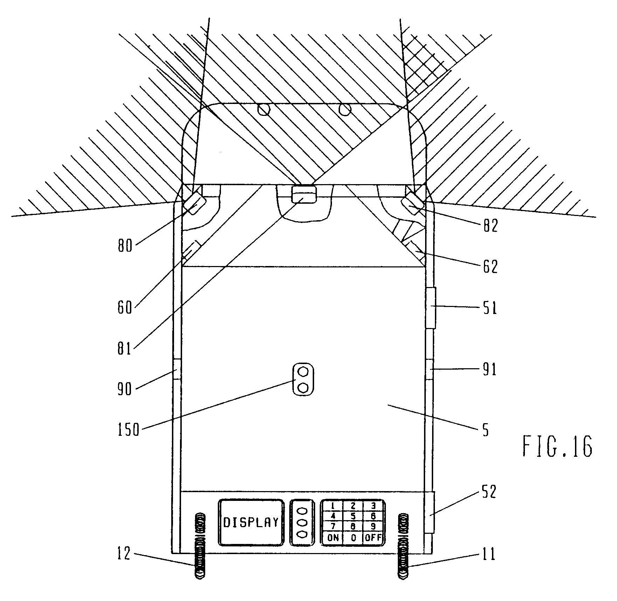

Um besonders niedrige Hindernisse, wie beispielsweise Türstopper erkennen zu können, sind unterhalb des Rammschutzbügels 15 am Gehäuse des Reinigungsfahrzeugs 1 Ultraschallsensoren 80, 81, 82 angebracht, die ein Schallfeld entsprechend den Figuren 15 und 16 erzeugen.

In diesem Zusammenhang sei erwähnt, daß die Ultraschallsensoren am Reinigungsfahrzeug 1 im Impulsbetrieb arbeiten und in gesteuerter Weise nacheinander aktiviert werden, so daß jeder der Schallsensoren einen Schallimpuls aussendet und in der Lage ist, dessen reflektierte Energie zu empfangen und auszuwerten, worauf dieser Ultraschallsensor deaktiviert und der nächste Ultraschallsensor aktiviert wird. Dadurch ist sichergestellt, daß nicht einer der Ultraschallsensoren die von einem anderen Ultraschallsensor abgestrahlte und aus der Umgebung reflektierte Energie aufnimmt und auswertet. Daher ist es auch möglich, wie bei den Ultraschallsensoren 80, 81 und 82 gezeigt, lediglich einen einzigen Schallkanal vorzusehen, durch den zunächst die Ultraschallenergie vom Schallerzeuger in Form eines Impulses abgestrahlt und dann auch die reflektierte Schallenergie aufgenommen und der Auswerteeinrichtung zugeführt wird.

Um seitlich auftauchende Hindernisse zu erkennen, sind darüber hinaus an jeder der Seitenwände des Gehäuses des Reinigungsfahrzeugs 1 ein Ultraschallsensor 90, 91 angebracht, die einen Schallkanal 92 bzw. 94 für den abzustrahlenden Ultraschall und einen Schallkanal 93 bzw. 95 für den Empfang von reflektierter Schallenergie aufweisen.

Zusätzlich zu den vorstehend beschriebenen Ultraschallsensoren sind an der Übergangswand 7 zwei Infrarotsensoren 105, 106 angeordnet, die schräg nach vorn weisen, wobei der Infrarotsensor 105 unter einem Winkel von etwa 30° und der Infrarotsensor 106 unter einem Winkel von etwa 60° zur Längsachse des Reinigungsfahrzeugs 1 geneigt ist. Mittels dieser Infrarotsensoren wird zusätzlich das Auftauchen von seitlichen Hindernissen überwacht, um das Reinigungsfahrzeug gegebenenfalls abbremsen oder entsprechend steuern zu können, wobei die Feststellung eines Hindernisses durch den Infrarotsensor 106 zu einer Notbremsung führt, falls dieses Hindernis sich in gefährlich geringem seitlichen Abstand vom Reinigungsfahrzeug 1 befindet.

Zur Durchführung von Reinigungsarbeiten weist das Reinigungsfahrzeug 1 eine im wesentlichen walzenförmige Reinigungsbürste 32 auf, die im Betrieb in Berührung mit dem Boden kommt und die über einen endlosen Riemen 34 von einem schematisch dargestellten Elektromotor 33 angetrieben wird. Der Elektromotor 33 ist auf einem Abdeckgehäuse 35 gehaltert, das ein schräg nach unten gerichtetes Blech aufweist, auf das die Reinigungsbürste 32 den vom Boden aufgenommen Schmutz schleudert und von dem aus sich ein Absaugschlauch 36 nach oben zu einer Schmutzaufnahmekammer 37 erstreckt. Unter der Schmutzaufnahmekammer 37 befindet sich ein Gebläse 38, das über eine nicht dargestellte Filteranordnung im Schmutzbehälter 37 einen Unterdruck erzeugt. Dieses Gebläse wird von einem Elektromotor 39 angetrieben.

Selbstverständlich können am Reinigungsfahrzeug 1 auch andere Arten von Reinigungsaggregaten angebracht werden, wie sie für Bodenreinigungsmaschinen bekannt sind.

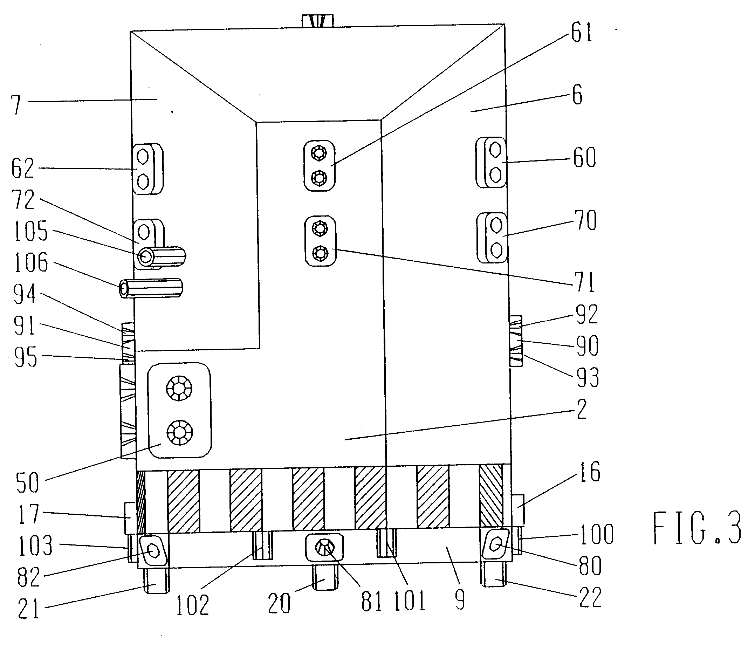

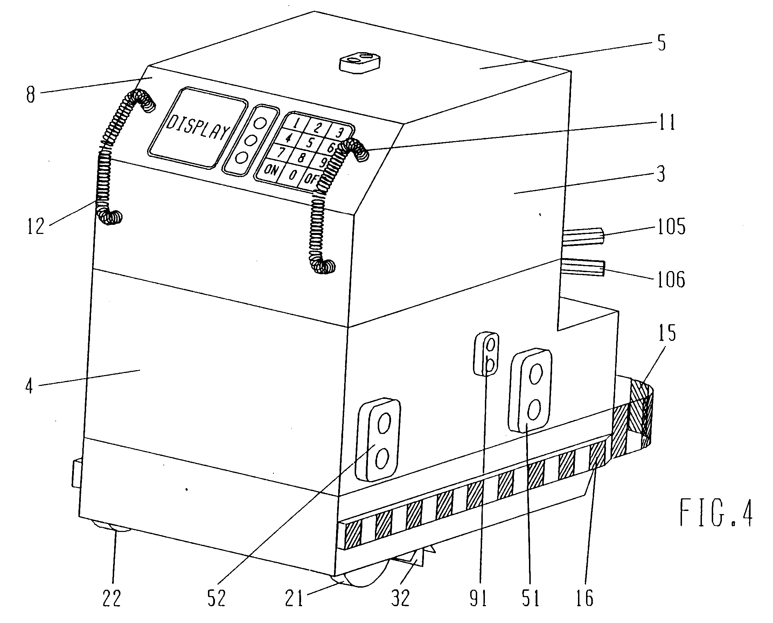

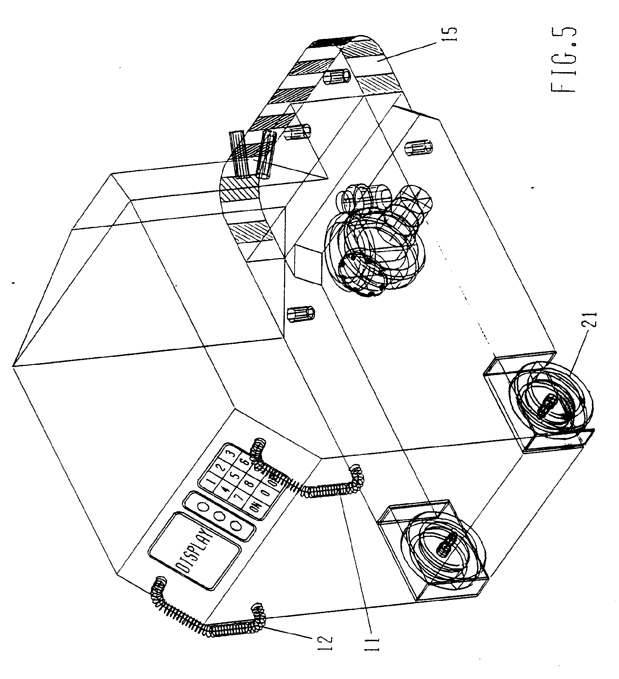

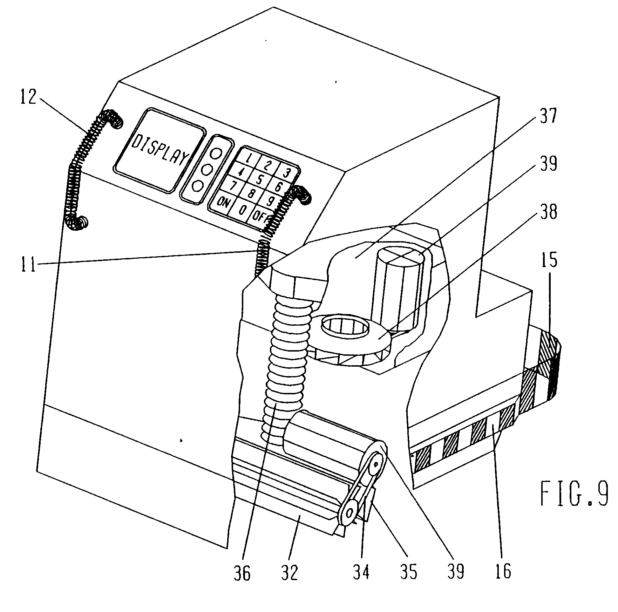

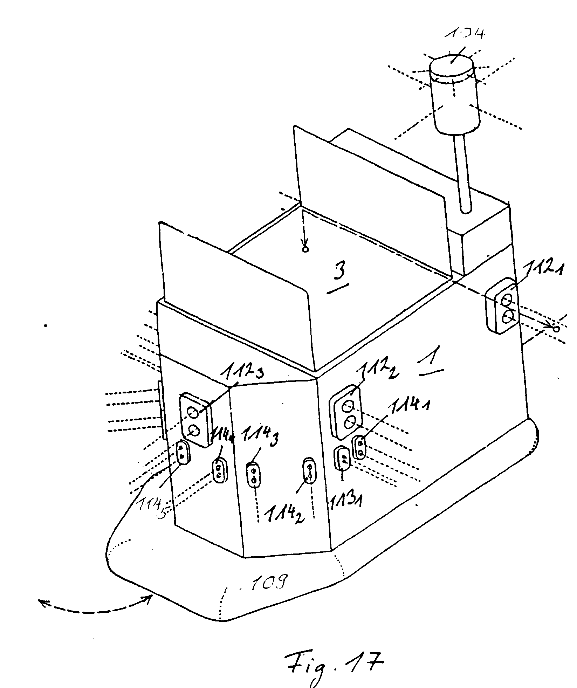

Fig. 17 zeigt ein erfindungsgemäßes Fahrzeug bei Verwendung als Flurförderfahrzeug. Dieses Fahrzeug ist ähnlich dem in Verbindung mit den Fig. 1 bis 9 beschriebenen Reinigungsfahrzeug ausgebildet, so daß die nachfolgende Beschreibung kurz erfolgen kann.

Das erfindungsgemäße Flurförderfahrzeug weist in gleicher Weise wie das vorstehend beschriebene Reinigungsfahrzeug eine nicht näher dargestellte Steuereinheit, die die Lenkbewegung und den Antrieb der Räder des Fahrzeug steuert sowie einen Sicherheitsbügel 109 für unmittelbare Berührungen auf, der - wie später noch erläutert werden wird - allerdings nur dann aktiv wird, wenn ein Gegenstand durch eine schnelle Bewegung in den unmittelbaren Bereich des Fahrzeugs 1 gelangt.

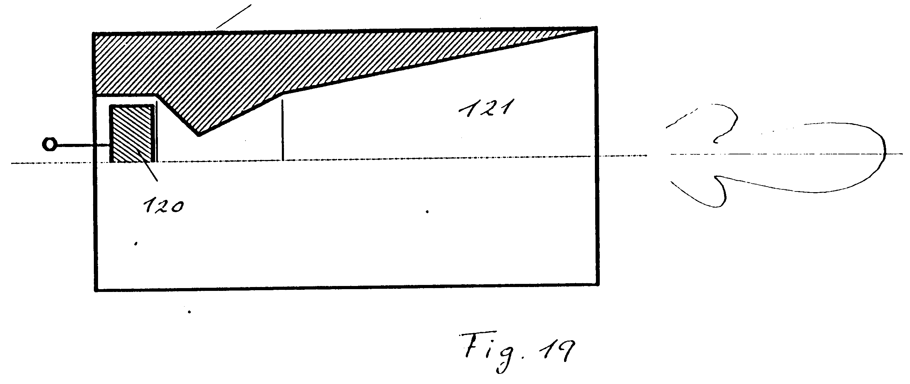

Das Flurförderfahrzeug weist wie das Reinigungsfahrzeug in Fig. 17 allerdings nicht dargestellte erste Sensoren auf, die die Umdrehungszahl der Räder sowie deren Lenkwinkel erfassen. Ferner sind an der Außenseite des Fahrzeugs zweite Sensoren 112₁ bis 112₅, dritte Sensoren 113₁ und 113₂ sowie Hindernissensoren 114₁ bis 114₈ vorgesehen. Von den zweiten Sensoren 112₁ bis 112₅ sind jeweils zwei an den Längsseiten des Fahrzeugs mit einem Abstand in Richtung der Längsachse und einer an der Vorderseite des Fahrzeugs angebracht. Jeder der Sensoren weist einen Ultraschall-Sender und einen Ultraschall-Empfänger auf, die eine Abstandsmessung bezogen auf eine feste Fläche nach der Laufzeitmethode erlauben, und deren Ausbildung in Verbindung mit Fig. 19 beschrieben wird.

Die dritten Sensoren 113₁ und 113₂ bestehen aus optoelektronischen Abstandssensoren, beispielsweise Sensoren der Typenbezeichnung 105 022 der Fa. Grieshaber, wobei jeweils ein Sensor an einer Fahrzeug-Längsseite an der vorderen Kante mit Blickrichtung senkrecht zur Fahrachse nach außen montiert ist.

Die Hindernissensoren 114₁ bis 114₈ bestehen aus Ultraschall-Sensoren, die wenigstens in einer Ebene parallel zum Fußboden eine breite Abstrahl-Keule aufweisen. Ihre Ausbildung kann insbesondere der Ausbildung der Hindernissensoren entsprechen, wie sie in Verbindung mit Fig. 11 bis 16 bereits beschrieben worden ist.

Ferner weist das Fahrzeug in an sich bekannter Weise eine Ladestation sowie eine Warnleuchte 104 bei Fehlfunktionen auf.

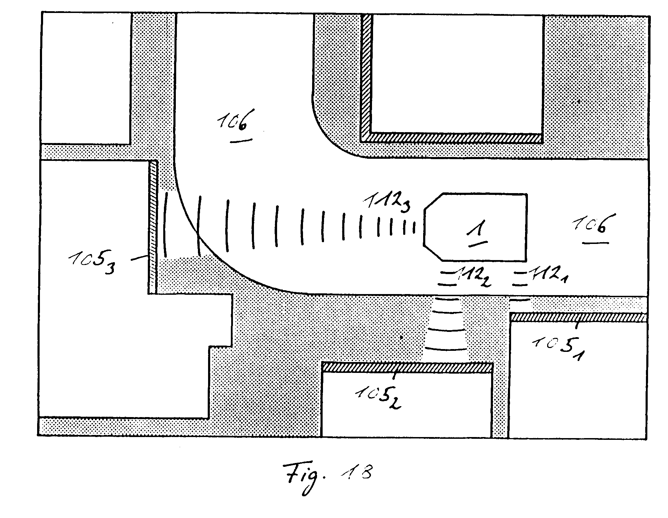

Fig. 18 zeigt schematisch das Navigationsprinzip des erfindungsgemäßen Fahrzeugs 1. Die zweiten Sensoren 112₁ bis 112₃ messen den Abstand zu Referenzflächen 105₁, 105₂ und 105₃, deren Position relativ zu dem zu befahrenden Kurs 106 fest in der Steuereinheit des Fahrzeugs eingespeichert ist. Aus den ermittelten Abstandswerten kann die Steuereinheit für einen bestimmten Zeitpunkt die Ist-Position des Fahrzeugs bestimmen und mit der Position vergleichen, die sie mittels "Aufintegration" der Ausgangssignale der ersten Sensoren berechnet hat. Bei einer Abweichung der Ist-Position von der berechneten Position kann die Steuereinheit dann entsprechende Korrekturbewegungen einleiten bzw. bei zu großen Abweichungen, die eine genaue Kursbestimmung unmöglich machen, einen Bedienerruf auslösen.

Fig. 19 zeigt eine Modifikation eines handelsüblichen Ultraschall-Senders 120 mit einem Schallkanal 121, der eine Modifikation der Schallkeule des Ultraschall-Senders erlaubt. Durch den in der Figur dargestellten Schall-Kanal mit einem Querschnitt, der in etwa zwei entgegengesetzten Trichtern entspricht, ergibt sich eine Schallkeule, wie sie rechts in Fig. 19 dargestellt ist, bei der das Ultraschall-Bündel auf ± 5° (bei einem Wert von -3 dB) fokussiert ist. Diese Ausbildung der Schallkeule eignet sich insbesondere zur Entfernungsmessung an weit entfernt liegenden Flächen.

Im übrigen wird bezüglich der Ausbildung des Schall-Kanals ausdrücklich auf die Darstellung in Fig. 19 Bezug genommen.

Vorstehend ist die Erfindung anhand von Ausführungsbeispielen ohne Beschränkung des allgemeinen Erfindungsgedankens beschrieben worden, innerhalb dessen selbstverständlich die verschiedensten Modifikationen möglich sind:

Insbesondere ist es von Vorteil, wenn durch einen nicht näher beschriebenen Multiplex-Betrieb nur ein Sensor oder eine Gruppe von Sensoren gleichzeitig angesteuert wird, so daß eine Überlagerung der reflektierten Schallwellen vermieden wird. Hierbei ergibt sich als weiterer Vorteil, daß nur eine einzige Ansteuereinheit für eine Vielzahl von Sensoren benötigt wird, da durch die erfindungsgemäße Ausbildung die eigentlichen Ultraschall-Sender und Empfänger sämtlicher Sensoren gleichartig aufgebaut sind. Trotzdem können durch die vorstehend beschriebenen und erfindungsgemäß vorgesehenen Schall-Kanäle die unterschiedlichsten Abstrahl-Charakteristiken erzielt werden.

In jedem Falle erhält man jedoch ein selbstfahrendes Fahrzeug, das ein leitlinienloses Fahren auf praktisch frei vorgebbaren und leicht zu ändernden Kursen ermöglicht.

Ein derartiges Fahrzeug kann nicht nur als automatisches Flurförderfahrzeug, sondern auch als Bewachungsfahrzeug für den Sicherheitsdienst, für militärische Aufgaben, sowie für die Unterhaltsreinigung von Gebäuden, Plätzen, die Pflege von Sportflächen sowie für landwirtschaftliche Einsätze verwendet werden. Dabei ist es - wie beschrieben - möglich, das Fahrzeug sowohl bahnbezogen als auch flächenbezogen zu steuern.

Darüberhinaus erhält man den weiteren Vorteil, daß das erfindungsgemäße Fahrzeug so genau positionierbar ist, daß es möglich ist, in Übergabestationen und mit speziellen Lastübergabe-Modulen beispielsweise Kunststoff-Normbehälter im Format 600 x 400 mm an **rein passive** Übergabestationen zu übergeben. Damit können beispielsweise Leiterplatten-Magazine, Druckplatten etc. transportiert werden.

Da durch die hohe Positioniergenauigkeit des erfindungsgemäßen Fahrzeugs die Lastübergabe vereinfacht wird und nur passive Übergabestationen benötigt werden, werden die Kosten des Fahrzeugs weiter reduziert.

## Patentansprüche

1. Selbstfahrendes Fahrzeug (1) mit
- einer Steuereinheit (30),
-- die den Lenkeinschlag und die Umdrehung wenigstens eines Rades (20) des Fahrzeugs steuert, und
-- in der ein frei vorgebbarer vom Fahrzeug zu befahrender Kurs sowie die Positionen von im Bereich des Kurses bereits vorhandener und nicht speziell angebrachter Umgebungsobjekte (45,46,47) als Koordinaten speicherbar sind,
- einer ersten Sensoreinheit,
-- die die zurückgelegte Strecke und die Richtung der zurückgelegten Strecke erfaßt, und
-- deren Ausgangssignal an der Steuereinheit angelegt ist, und
- einer zweiten Sensoreinheit (50,51,52),
-- deren Ausgangssignal an der Steuereinheit anliegt, und
-- die wenigstens drei abstandsmessende Sensoren aufweist,
--- die den Abstand zwischen dem Fahrzeug (1) und den im Bereich des Kurses gespeicherten Umgebungsobjekten (45, 46, 47) messen, und
--- von denen einer den entsprechenden Abstand in Richtung der Fahrzeug-Längsachse mißt, und
--- die beiden anderen Abstände zu Umgebungsobjekten in Richtung der Fahrzeug-Querachse messen, wobei zu einem Umgebungsobjekt zwei in Richtung der Fahrzeug-Längsachse versetzte Abstände gemessen werden,
bei dem die Steuereinheit (30) zur Überprüfung der Ist-Position und Ist-Ausrichtung des Fahrzeugs an vorgegebenen Punkten des Kurses den mittels der zweiten Sensoreinheit gemessenen Abstand mit dem berechneten Abstand vergleicht, der sich aufgrund der gespeicherten Position der Umgebungsobjekte (45, 46, 47) und der aufgrund der Ausgangssignale des ersten Sensors erwarteten Soll-Position und -Ausrichtung auf dem frei vorgebbaren Kurs ergibt.

2. Fahrzeug nach Anspruch 1,
dadurch **gekennzeichnet,** daß die zweiten Sensoren Abstände zu Kanten und/oder Deckenvorsprüngen messen.

3. Fahrzeug nach Anspruch 1 oder 2,
dadurch **gekennzeichnet**, daß die Steuereinheit (30) bei einer Abweichung der Ist-Position oder -Ausrichtung von der Soll-Position bzw. -Ausrichtung Korrektur-Fahrbewegungen durchführt.

4. Fahrzeug nach Anspruch 1 oder 2,
dadurch **gekennzeichnet**, daß die Steuereinheit (30) die Soll-Bahn-Koordinate entsprechend der festgestellten Ist-Position des Fahrzeugs (1) ändert, wenn die festgestellte Ist-Position auf dem vorgegebenen Kurs liegt aber von der Soll-Position abweicht, und die Ausrichtung des Reinigungsfahrzeugs (1) mit dem örtlichen Verlauf der Soll-Bahn übereinstimmt.

5. Fahrzeug nach einem der Ansprüche 1 bis 4,
dadurch **gekennzeichnet**, daß die Steuereinheit (30) einen Vergleich des erwarteten Abstands mit dem zu Umgebungsobjekten (45,46,47) gemessenen Abstand durchführt, wenn aufgrund der mittels der Ausgangssignale des ersten Sensors bestimmten Position ein Umgebungsobjekt, dessen Position gespeichert ist, erreicht ist, und/oder wenn eine Richtungsänderung durchgeführt werden soll.

6. Fahrzeug nach einem der Ansprüche 1 bis 5,
dadurch **gekennzeichnet**, daß die zweiten Sensoren (50,51,52,150) abstandsmessende Ultraschallsensoren sind.

7. Fahrzeug nach einem der Ansprüche 1 bis 6,
dadurch **gekennzeichnet**, daß an jeder Fahrzeugseite zwei in Richtung der Fahrzeug-Längsachse versetzte Sensoren angeordnet sind.

8. Fahrzeug nach einem der Ansprüche 1 bis 7,
dadurch **gekennzeichnet,** daß die an der gleichen Fahrzeugseite angebrachten Sensoren die Abstände des Fahrzeugs von dem gleichen Umgebunssobjekt in Richtung der Querachse des Fahrzeugs messen.

9. Fahrzeug nach einem der Ansprüche 1 bis 8,
dadurch **gekennzeichnet**, daß wenigstens ein an die Raumdecke gerichteter zweiter Sensor (15) vorgesehen ist.

10. Fahrzeug nach einem der Ansprüche 1 bis 9,
dadurch **gekennzeichnet**, daß die Steuereinheit (30) die Messung des Abstandes zu einem Umgebungsobjekt (45,46,47), dessen Position gespeichert ist, nach einer definierten Verfahrstrecke des Fahrzeugs (1) wiederholt.

11. Fahrzeug (1) nach einem der Ansprüche 1 bis 10,
dadurch **gekennzeichnet**, daß der erste Sensor ein Impulsgeber (23) ist, der mit mindestens einem Rad (20) gekoppelt ist.

12. Fahrzeug nach einem der Ansprüche 1 bis 11,
dadurch **gekennzeichnet**, daß der erste Sensor zusätzlich den Lenkeinschlag mindestens eines Rades erfaßt.

13. Fahrzeug nach einem der Ansprüche 1 bis 12,
dadurch **gekennzeichnet**, daß wenigstens ein dritter Sensor (113) vorgesehen ist, aus dessen Ausgangssignal die Steuereinheit die Position des Fahrzeugs (1) relativ zu einer Haltestation bestimmt.

14. Fahrzeug nach Anspruch 13,
dadurch **gekennzeichnet**, daß der dritte Sensor (113) ein optischer Abstandssensor ist, der zur Bestimmung der Lage des Fahrzeugs (1) relativ zu einer Haltestation die Lage einer rechtwinkligen Kante einer ebenen Fläche in kurzen Zeitabständen erfaßt.

15. Fahrzeug nach Anspruch 14,
dadurch **gekennzeichnet**, daß das Fahrzeug (1) bei der Positionserfassung während des Anfahrens einer Station geradlinig verfährt und ca. pro Millimeter Verfahrweg eine Abstandsmessung erfolgt.

16. Fahrzeug nach einem der Ansprüche 1 bis 15,
**gekennzeichnet** durch mehrere Hindernissensoren (60, 61, 62, 70, 71, 72, 80, 81, 82, 90, 91, 92, 100, 101, 102, 103, 105, 106).

17. Fahrzeug nach Anspruch 16,
dadurch **gekennzeichnet**, daß im vorderen Bereich auf einem Kreisbogen angeordnet, senkrecht nach unten gerichtete Absturzüberwachungssensoren (100, 101, 102, 103) vorgesehen sind.

18. Fahrzeug nach Anspruch 17,
dadurch **gekennzeichnet**, daß die Absturzüberwachungssensoren Infrarotsensoren (100, 101, 102, 103) sind.

19. Fahrzeug nach einem der Ansprüche 16 bis 18,
dadurch **gekennzeichnet**, daß zumindest an der Vorderseite und im vorderen Seitenbereich Ultraschall-Hindernissensoren (60, 61, 62, 70, 71, 72, 80, 81, 82) vorgesehen sind, deren Schallkeulen mittels vorgesetzter Schallkanäle (63, 65, 67, 73, 75, 77) so geformt sind, daß mindestens ein den zu überwachenden Bereich vollständig abdeckendes Schallfeld gebildet ist.

20. Fahrzeug nach Anspruch 19,
**gekennzeichnet** durch drei Ultraschall-Hindernissensoren (60, 61, 62), die ein zu einer horizontalen Ebene symmetrisches, sich in gleicher Weise oberhalb und unterhalb der Ebene ausbreitendes, einen zu überwachenden Bereich vollständig abdeckendes Schallfeld erzeugen.

21. Fahrzeug nach Anspruch 19 oder 20,
**gekennzeichnet** durch mindestens eine Gruppe von drei Ultraschall-Hindernissensoren (70, 71, 72, 80, 81, 82), die ein schräg nach vorn und unten gerichtetes, einen zu überwachenden Bereich vollständig abdeckendes Schallfeld erzeugen.

22. Fahrzeug nach einem der Ansprüche 19 bis 21,
**gekennzeichnet** durch zwei im Bereich einer vorderen Seitenkante des Fahrzeugs (1) vorgesehene optische Hindernissensoren (105, 106), von denen der eine unter einem Winkel von 15° bis 40° bezüglich der Längsachse des Fahrzeugs (1) und der andere unter einem Winkel von 50° bis 70° bezüglich der Längsachse des Fahrzeugs (1) nach vorn abstrahlt.

23. Fahrzeug nach einem der Ansprüche 16 bis 22,
dadurch **gekennzeichnet**, daß die Steuerung das Fahrzeug stoppt, wenn einer der Hindernissensoren ein Hindernis im Fahrweg des Fahrzeugs erfaßt.

24. Fahrzeug nach einem der Ansprüche 16 bis 23,
dadurch **gekennzeichnet**, daß die Steuerung eine Ausweichbewegung des Fahrzeugs einleitet, wenn die Steuerung ein Hindernis im Fahrweg des Fahrzeugs erfaßt.

25. Fahrzeug nach einem der Ansprüche 16 bis 24,
dadurch **gekennzeichnet**, daß die zweiten Sensoren und die Hindernissensoren im wesentlichen gleichartige Ultraschallsender aufweisen, deren Abstrahlcharakteristik durch Schallkanäle beeinflußt ist.

26. Fahrzeug nach Anspruch 25,
dadurch **gekennzeichnet**, daß den Ultraschallsendern der zweiten Sensoren Schallkanäle vorgeschaltet sind, die das Ultraschallbündel auf ± 5° fokussieren.

27. Fahrzeug nach Anspruch 25 oder 26,
dadurch **gekennzeichnet**, daß den Ultraschallsendern der Hindernissensoren Schallkanäle vorgeschaltet sind, die das Ultraschallbündel in einer Ebene senkrecht zum Boden auf ± 5° und in einer Ebene parallel zum Boden auf ± 30° fokussieren.

28. Fahrzeug nach einem der Ansprüche 16 bis 27,
dadurch **gekennzeichnet**, daß die Hindernissensoren (60,61,62,70,71,72,80,81,82) im wandnahen Bereich zur Navigationsunterstützung dienen.

29. Fahrzeug nach einem der Ansprüche 1 bis 28,
dadurch **gekennzeichnet**, daß die Erstellung eines neuen Fahrkurses Off-Line und insbesondere interaktiv an einem Personal-Computer erfolgt, und daß die Programmdaten des neuen Kurses an einer Station oder durch Fernübertragung an die Steuereinheit des Fahrzeugs übergebbar sind.

30. Fahrzeug nach einem der Ansprüche 1 bis 29,
**gekennzeichnet** durch die Verwendung als Reinigungsfahrzeug.

31. Fahrzeug nach Anspruch 30,
**gekennzeichnet** durch eine Reinigungsbürste (32) mit einer oberhalb dieser angeordneten Absaugeinrichtung (36, 38, 39).

32. Fahrzeug nach einem der Ansprüche 1 bis 29,
**gekennzeichnet** durch die Verwendung als Flurförderfahrzeug.

33. Fahrzeug nach dem Anspruch 32,
**gekennzeichnet** durch eine Last-Obergabeeinrichtung.

## Claims

1. Self-propelled vehicle (1) comprising
- a control unit (30),
-- controlling the steering angle and the rotation of at least one wheel (20) of the vehicle, and
-- wherein an optionally predeterminable path, along which the vehicle is to travel, as well as the positions of environmental objects (45, 46, 47), which are present already in the vicinity of the path and which are not specifically disposed there, may be stored as coordinates,
- a first sensor unit
-- which senses the distance covered and the direction of the covered distance, and
-- whose output signal is applied to said control unit, and
- a second sensor unit (50, 51, 52)
-- whose output signal is applied to said control unit, and
-- which includes at least three sensors for measuring distances,
--- which sense the distance between the vehicle (1) and said environmental objects (45, 46, 47) stored in the vicinity of the path, and
--- whereof one senses the corresponding distance along the longitudinal axis of the vehicle, and
--- whereof the other two sense distances of said environmental objects along the transverse axis of the vehicle, whereby two distances of an environmental object are measured which are offset along the longitudinal axis of the vehicle,
wherein, for verifying the actual position and the actual orientation of the vehicle at defined points of the path, said control unit (30) compares the distance sensed by means of said second sensor unit against the computed distance which is obtained on the basis of the stored position of said environmental objects (45, 46, 47) and the desired position and orientation on the optionally predeterminable path, which may be expected on the basis of the output signals of said first sensor.

2. Vehicle according to Claim 1,
**characterized in** that said second sensors are provided to sense distances from edges and/or ceiling projections.

3. Vehicle according to Claim 1 or 2,
**characterized in** that in the event of a variation between the actual position or orientation and the desired position or orientation, said control unit (30) performs correcting navigation movements.

4. Vehicle according to Claim 1 or 2,
**characterized in** that said control unit (30) changes a desired-track coordinate en correspondence with the sensed actual position of the vehicle (1) when the actual position is located on the specified track but deviates from the desired position, and when the orientation of the cleaning vehicle (1) is congruent with the local course of the desired path.

5. Vehicle according to any of Claims 1 to 4,
**characterized in** that said control unit (30) performs a comparison of the expected distance against the sensed distance from environmental objects (45, 46, 47) if, based on the position sensed by means of the output signals from the first sensor, an environmental object is reached whose position is stored, and/or if a change of direction is to be performed.

6. Vehicle according to any of Claims 1 to 5,
**characterized in** that said second sensors (50, 51, 52, 15) are distance-sensing ultrasonic sensors.

7. Vehicle according to any of Claims 1 to 6,
**characterized in** that two sensors respectively are disposed on either side of the vehicle, which are offset along the longitudinal axis of the of the vehicle.

8. Vehicle according to any of Claims 1 to 7,
**characterized in** that the sensors mounted on the same side of the vehicle sense the distances between the vehicle and the same environmental object along the transverse axis of the vehicle.

9. Vehicle according to any of Claims 1 to 8,
**characterized in** that at least one second sensor (15) is provided which is directed towards the ceiling of a room.

10. Vehicle according to any of Claims 1 to 9,
**characterized in** that after a defined travelling distance of the vehicle has been covered, said control unit (30) repeats the measurement of the distance from an environmental object (45, 46, 47) whose position is stored.

11. Vehicle according to any of Claims 1 to 10,
**characterized in** that said first sensor is a pulse generator (23) coupled to at least one wheel (20).

12. Vehicle according to any of Claims 1 to 11,
**characterized in** that said first sensor moreover detects the steering angle of at least one wheel.

13. Vehicle according to any of Claims 1 to 12,
**characterized in** that at least one third sensor (113) is provided which furnishes an output signal by which said control unit detects the position of the vehicle (1) relative to a stop.

14. Vehicle according to Claim 13,
**characterized in** that said third sensor (113) is an optical telemetry sensor which detects, at short intervals, the position of a rectangular edge of a plane surface for determining the position of the vehicle (1) relative to a stop.

15. Vehicle according to Claim 14,
**characterized in** that in the case of detection of the position as a stop is approached, the vehicle (1) travels along a straight line, and that the distance measurement is performed approximately every millimetre of the path to be covered.

16. Vehicle according to any of Claims 1 to 15,
**characterized** by a plurality of obstacle sensors (60, 61, 62, 70, 71, 72, 80, 81, 82, 90, 91, 92, 100, 101, 102, 103, 105, 106).

17. Vehicle according to Claim 16,
**characterized in** that in the front part crash-monitoring sensors (100, 101, 102, 103) are disposed on a circular arc which are oriented to extend perpendicularly downward.

18. Vehicle according to Claim 17,
**characterized in** that said crash-monitoring sensors (100, 101, 102, 103) are infrared sensors.

19. Vehicle according to any of Claims 16 to 18,
**characterized in** that at least on the front side and in the front side area ultrasonic obstacle sensors (60, 61, 62, 70, 71, 72, 80, 81, 82) are provided whose sound beam lobes are shaped by means of preceding sound channels (63, 65, 67, 73, 75, 77) so as to form at least a sound field which completely covers the area to be monitored.

20. Vehicle according to Claim 19,
**characterized** by three ultrasonic obstacle sensors (60, 61, 62) which produce a sound field symmetrical with respect to a horizontal plane and propagating in the same manner above and below said plane, which covers completely an area to be monitored.

21. Vehicle according to Claim 19 or 20,
**characterized** by at least one group of three ultrasonic obstacle sensors (70, 71, 72, 80, 81, 82) which produce a sound field inclined in the forward and downward directions, and completely covers an area to be monitored.

22. Vehicle according to any of Claims 19 to 21,
**characterized by** two optical obstacle sensors (105, 106) installed in the area of of a front edge of the vehicle (1), emitting at an angle of 15° à 40° relative to the longitudinal axis of the vehicle (1), and the other emitting at an angle of 50° to 70°, relative to the longitudinal axis of the vehicle (1) in a forward direction.

23. Vehicle according to any of Claims 16 to 22,
**characterized in** that said control unit stops the vehicle as soon as one of said obstacle sensors detects an obstacle along the path of the vehicle.

24. Vehicle according to any of Claims 16 to 23,
**characterized in** that said control unit initiates a passing movement of the vehicle as soon as said control unit detects an obstacle along the path the vehicle.

25. Vehicle according to any of Claims 16 to 24,
**characterized in** that said second sensors and said obstacle sensors comprise substantially similar ultrasonic emitters whose characteristic radiation pattern is influenced by by said sound channels.

26. Vehicle according to Claim 25,
**characterized in** that sound channels are disposed to precede said ultrasonic emitters of said second sensors, which focus the ultrasound beam to within ± 5°.

27. Vehicle according to Claim 25 or 26,
**characterized in** that sound channels are disposed to precede said ultrasonic emitters of said obstacle sensors, for focussing the ultrasound beam in a plane perpendicular to the floor, to within ± %5°, and in a plane parallel to the floor, to within ± 30°.

28. Vehicle according to any of Claims 16 to 27,
**characterized in** that said obstacle sensors (60, 61, 62, 70, 71, 72, 80, 81, 82) in the vicinity of the walls serve to assist navigation.

29. Vehicle according to any of Claims 1 to 28,
**characterized in** that the programming of a new travelling path is performed off-line, and in particular in a dialogue, on a personal computer, and that the programmed data on the new path may be transferred at a stop or by telecommunication to said control unit of the vehicle.

30. Vehicle according to any of Claims 1 to 29,
**characterized** by the application as cleaning vehicle.

31. Vehicle according to Claim 30,
**characterized** by a cleaning brush (32) with aspirator means (36, 38, 39) mounted thereabove.

32. Vehicle according to any of Claims 1 to 29,
**characterized** by the application as industrial truck.

33. Vehicle according to Claim 32,
**characterized** by charge-transferring means.

## Revendications

1. Véhicule automoteur (1) comprenant
- un organe de commande (30),
-- qui commande l'angle de braquage et la rotation d'au moins une roue (20) du véhicule, et
-- dans lequel on peut mettre en mémoire comme coordonnées une route, qui peut être spécifiée à volonté et sur laquelle le véhicule doit passer, ainsi que les positions des objets d'environnement (45, 46, 47), qui existent déjà dans la zone de la route et qui ne sont pas disposés particulièrement,
- une première unité à détecteurs
-- qui détecte la distance parcourue et la direction de la disance parcourue, et
-- dont le signal de sortie est appliqué audit organe de commande, et
- une deuxième unité à détecteurs (50, 51, 52)
-- dont le signal de sortie est appliqué audit organe de commande, et
-- qui comprend au moins trois détecteurs à mesurer la distance,
--- qui mesurent la distance entre le véhicule (1) et lesdits objets d'environnement (45, 46, 47) dans la zone de la route, qui sont mis en mémoire, et
--- dont un détecte la distance correspondante le long de l'axe longitudinal du véhicule, et
--- dont les autres deux détectent des distances des objets d'environnement le long de l'axe transversal du véhicule, à mesurage de deux distances d'un objet d'environnement, qui se trouvent en déport le long de l'axe longitudinal du véhicule,
dans lequel, pour une vérification de la position réelle et l'orientation du véhicule relativement aux points définies de la route, ledit organe de commande (30) établit une comparaison entre la distance détectée moyennant de ladite deuxième unité à détecteurs, d'une part, et la distance calculée, d'autre part, la dernière étant obtenue à la base de la position desdits objets d'environnement (45, 46, 47) mis en mémoire, ainsi qu'à la base de la position et de l'orientation de consigne sur la route, qui on peut spécifier à volonté, qui sont escomptées en considération des signaux de sortie du premier détecteur.

2. Véhicule selon la revendication 1,
**caractérisé en** ce que lesdits deuxièmes détecteurs servent à détecter des distances des arêtes ou bords et/ou des parties en saillie du plafond.

3. Véhicule selon la revendication 1 ou 2,
**caractérisé en** ce qu'au cas d'un écart entre la position ou l'orientation réelle et la position ou l'orientation de consigne, ledit organe de commande (30) réalise des mouvements de navigation de correction.

4. Véhicule selon la revendication 1 ou 2,
**caractérisé en** ce que ledit organe de commande (30) modifie la coordonné de chemin de consigne en correspondance avec la position réelle détectée du véhicule (1), quand la position réelle se trouve sur la route spécifiée mais s'écarte de la position de consigne, et quand l'orientation du véhicule de nettoyage (1) se trouve en coïncidence avec le tracé locale du chemin de consigne.

5. Véhicule selon une quelconque des revendications 1 à 4,
**caractérisé** en ce que ledit organe de commande (30) établit une comparaison entre la distance escomptée et la distance détectée à des objets d'environnement (45, 46, 47), quand, à la base de la position détectée au moyen des signaux de sortie du premier détecteur, un objet d'environnement est gagné, dont la position est mise en mémoire, et/ou quand un rebroussement est à réaliser.

6. Véhicule selon une quelconque des revendications 1 à 5,
**caractérisé en** ce que lesdits deuxièmes détecteurs (50, 51, 52, 15) sont des détecteurs à ultrason à mesurer une distance.

7. Véhicule selon une quelconque des revendications 1 à 6,
**caractérisé en** ce que deux détecteurs respectifs sont disposés de chaque côté du véhicule, qui se trouvent en déport le long de l'axe longitudinal du véhicule.

8. Véhicule selon une quelconque des revendications 1 à 7,
**caractérisé en** ce que les détecteurs disposés du même côté du véhicule servent à détecter les distances entre le véhicule et le même objet d'environnement le long de l'axe transversal du véhicule.

9. Véhicule selon une quelconque des revendications 1 à 8,
**caractérisé en** ce qu'au moins un deuxième détecteur (15) est prévu, qui est dirigé vers le plafond du local.

10. Véhicule selon une quelconque des revendications 1 à 9,
**caractérisé en** ce que ledit organe de commande (30) répéte, après une distance de mouvement spécifié du véhicule, la détection de la distance d'un objet d'environnement (45, 46, 47), dont la position est mise en mémoire.

11. Véhicule selon une quelconque des revendications 1 à 10,
**caractérisé en** ce que ledit premier détecteur est un impulseur (23) qui est couplé à au moins une roue (20).

12. Véhicule selon une quelconque des revendications 1 à 11,
**caractérisé en** ce que ledit premier détecteur détecte en plus l'angle de braquage d'au moins une roue.

13. Véhicule selon une quelconque des revendications 1 à 12,
**caractérisé en** ce qu'au moins un troisième détecteur (113) est prévu, qui fournit un signal de sortie dont ledit organe de commande détecte la position du véhicule (1) relative à un point d'arrêt.

14. Véhicule selon la revendication 13,
**caractérisé en** ce que ledit troisième détecteur (113) est un détecteur télemètre optique, qui détecte, aux courts intervalles de temps, la position d'un bord rectangulaire d'une surface plane pour la détermination de la position du véhicule (1) relatif à un point d'arrêt

15. Véhicule selon la revendication 14,
**caractérisé** en ce qu'à une détection de position au cours de l'approche à un point d'arrêt, le véhicule (1) parcourt le long d'une ligne droite, et qu'une détection de la distance est réalisée par milli mètre de route parcouru environ.

16. Véhicule selon une quelconque des revendications 1 à 15,
**caractérisé** par une pluralité des détecteurs d'obstacles (60, 61, 62, 70, 71, 72, 80, 81, 82, 90, 91, 92, 100, 101, 102, 103, 105, 106).

17. Véhicule selon la revendication 16,
**caractérisé** en ce que dans la partie avant des détecteurs de surveillance en vue de chute (100, 101, 102, 103) sont disposés sur un arc de cercle, qui sont dirigés perpendiculairement en bas.

18. Véhicule selon la revendication 17,
**caractérisé** en ce que lesdits détecteurs de surveillance en vue de chute (100, 101, 102, 103) sont des détecteurs à infrarouge.

19. Véhicule selon une quelconque des revendications 16 à 18,
**caractérisé en** ce qu'au moins à la face et dans la zone latérale avant des détecteurs d'obstacle à ultrason (60, 61, 62, 70, 71, 72, 80, 81, 82) sont prévus, dont les lobes de son sont formés au moyen des voies sonores en amont (63, 65, 67, 73, 75, 77) de façon à former au moins un champ sonore qui couvre complètement la zone à balayer.

20. Véhicule selon la revendication 19,
**caractérisé** par trois détecteurs d'obstacle à ultrason (60, 61, 62), qui engendrent un champ sonore qui est en symétrie par rapport un plan horizontal, à propagation égale au dessus et dessous dudit plan, et qui couvre complètement une zone à balayer.

21. Véhicule selon la revendication 19 ou 20,
**caractérisé** par au moins une groupe à trois détecteurs d'obstacle à ultrason (70, 71, 72, 80, 81, 82), qui engendrent un champ sonore qui est dirigé en biais vers l'avant et en bas et qui couvre complètement une zone à balayer.

22. Véhicule selon une quelconque des revendications 19 à 21,
**caractérisé** par deux détecteurs d'obstacle optiques (105, 106), qui sont disposés dans la zone d'un bord avant du véhicule (1), un à émission à un angle de 15° à 40°, par rapport à l'axe longitudinal du véhicule (1), et l'autre à émission à un angle de 50° à 70°, par rapport à l'axe longitudinal du véhicule (1), vers l'avant

23. Véhicule selon une quelconque des revendications 16 à 22,
**caractérisé en** ce que l'organe de commande arrêt le véhicule dès qu'un desdits détecteurs d'obstacle détecte un obstacle sur le chemin du véhicule.

24. Véhicule selon une quelconque des revendications 16 à 23,
**caractérisé en** ce que l'organe de commande provoque un mouvement d'évitement du véhicule dès que l'organe de commande détecte un obstacle sur le chemin du véhicule.

25. Véhicule selon une quelconque des revendications 16 à 24,
**caractérisé en** ce que lesdits deuxièmes détecteurs et lesdits détecteurs d'obstacle comprennent des émetteurs ultrasonores essentiellement similaires, dont la caractéristique de rayonnement est influencée par lesdites voies sonores.

26. Véhicule selon la revendication 25,
**caractérisé en** ce que des voies sonores sont disposées en amont desdites émetteurs ultrasonores desdits deuxièmes détecteurs, qui focalisent le faisceau ultrasonore à une zone de ± 5°.

27. Véhicule selon la revendication 25 ou 26,
**caractérisé en** ce que des voies sonores sont disposées en amont desdits émetteurs ultrasonores desdits détecteurs d'obstacle, qui focalisent le faisceau ultrasonore dans un plan perpendiculaire sur le sol, au dedans de ± %5°, et dans un plan parallèle au sol, au dedans de ± 30°.

28. Véhicule selon une quelconque des revendications 16 à 27,
**caractérisé en** ce que lesdits détecteurs d'obstacle (60, 61, 62, 70, 71, 72, 80, 81, 82) dans la zone proche aux murs servent à assister la navigation.

29. Véhicule selon une quelconque des revendications 1 à 28,
**caracterisé en** ce que l'établissement d'une nouvelle route à parcourir est réalisé en autonome, et en particulier par interaction, à un ordinateur personnel, et en ce que les données programmées de la nouvelle route peuvent être transmises à un point d'arrêt ou par télétransmission audit organe de commande du véhicule.

30. Véhicule selon une quelconque des revendications 1 à 29,
**caractérisé** par l'emploi comme véhicule de nettoyage.

31. Véhicule selon la revendication 30,
**caractérisé** par une brosse de nettoyage (32) à un moyen d'aspiration (36, 38, 39) monté en dessus de la brosse.

32. Véhicule selon une quelconque des revendications 1 à 29,
**caractérisé** par l'emploi comme véhicule convoyeur du sol.

33. Véhicule selon la revendication 32,
**caractérisé** par un dispositif de transfert de charge.
